# EUROPEAN PATENT SPECIFICATION

(11) **EP 0 847 046 B1**
(45) Date of publication and mention of the grant of the patent: **16.08.2001**
(21) Application number: 98101611.6
(22) Date of filing: 20.12.1995
(51) Int. Cl.: G11B 7/00, G11B 7/007, G11B 7/013, G11B 7/125, G11B 7/24, G11B 19/04

(54) **Variable signal to space relation for optical information media**
Veränderliche Beziehung zwischen Signal und Zwischenraum bei einem optischem Aufzeichnungsmedium
Relation variable entre le signal et l'espacement sur un support d'enregistrement optique

(30) Priority: 20.12.1994 JP 31659594; 24.07.1995 JP 18753395; 24.07.1995 JP 18753495
(43) Date of publication of application: 10.06.1998
(62) Divisional of application: 95120181.3
(73) Proprietor: MATSUSHITA ELECTRIC INDUSTRIAL CO., LTD, Kadoma-shi, Osaka 571-0000 (JP)
(72) Inventor: Nagata, Ken'ichi, Nishinomiya-shi, Hyogo 663 (JP); Nishiuchi, Kenichi, Hirakata-shi, Osaka 573-1135 (JP); Ohno, Eiji, Hirakata-shi, Osaka 573-01 (JP); Akahira, Nobuo, Yawata-shi, Kyoto 614 (JP); Narumi, Kenji, Yodogawa-ku, Osaka-shi, Osaka 532 (JP)
(74) Representative: Hafner, Dieter, Dr.rer.nat., Dipl.-Phys.

(56) References cited:
- EP-A- 0 206 824
- EP-A- 0 317 344
- EP-A- 0 548 981
- EP-A- 0 594 132
- FR-A- 2 508 218
- US-A- 4 443 870
- US-A- 4 587 648
- US-A- 4 947 384
- US-A- 5 040 165
- US-A- 5 233 593
- US-A- 5 276 670
- PATENT ABSTRACTS OF JAPAN vol. 014, no. 301 (P-1069), 28 June 1990 & JP 02 094113 A (MATSUSHITA ELECTRIC IND CO LTD), 4 April 1990,
- PATENT ABSTRACTS OF JAPAN vol. 015, no. 083 (P-1171), 26 February 1991 & JP 02 297724 A (MATSUSHITA ELECTRIC IND CO LTD), 10 December 1990,
- PATENT ABSTRACTS OF JAPAN vol. 016, no. 442 (P-1421), 16 September 1992 & JP 04 153919 A (NIPPON TELEGR & TELEPH CORP), 27 May 1992,
- PATENT ABSTRACTS OF JAPAN vol. 017, no. 585 (P-1632), 25 October 1993 & JP 05 166187 A (MATSUSHITA ELECTRIC IND CO LTD), 2 July 1993,
- PATENT ABSTRACTS OF JAPAN vol. 016, no. 555 (P-1454), 25 November 1992 & JP 04 212718 A (NIPPON TELEGR & TELEPH CORP), 4 August 1992,
- PATENT ABSTRACTS OF JAPAN vol. 013, no. 032 (P-817), 25 January 1989 & JP 63 229625 A (MATSUSHITA ELECTRIC IND CO LTD), 26 September 1988,
- PATENT ABSTRACTS OF JAPAN vol. 018, no. 057 (P-1684), 28 January 1994 & JP 05 274675 A (HITACHI ELECTRON ENG CO LTD), 22 October 1993,
- PATENT ABSTRACTS OF JAPAN vol. 018, no. 042 (P-1680), 21 January 1994 & JP 05 266490 A (FUJI ELECTRIC CO LTD), 15 October 1993,
- PATENT ABSTRACTS OF JAPAN vol. 009, no. 334 (P-417), 27 December 1985 & JP 60 157740 A (RICOH KK), 19 August 1985,

## Description

The present invention relates to a recording method for an optical information recording medium (optical disc) as well as a recording apparatus for such optical information recording medium.

JP-A-5266490 refers to a recording method and recording apparatus of the kind as claimed in the preambles of the independent claims. To prolong the life of an optical disc by preventing degradation due to a heat cycle applied from the laser beam, short dummy parts are set to the head part and the rear part of the storage data part of a sector set in the track of the optical disc.

As the above optical disk (optical information recording media), a phase transition type system using a chalcogenide as a recording thin film material is known well. This recording thin film is a photo-sensitive layer formed on a substrate, which transfers into a crystal state or an amorphous state by irradiation with a light beam such as a laser beam. The recording layer of the overwritable optical disk of a phase transition type can record data usually by using a crystal state for a non-recorded state and an amorphous state for a recorded state. The amorphous state is generated by irradiating a laser beam to melt the recording layer followed by rapid cooling down thereof. The crystal state is generated for erasing the recorded data by irradiating a laser beam at a lower power to raise the temperature of the recording layer.

One of the merits of the phase transition type system is that only one laser beam is required and that the disk can be overwritten easily. If the laser beam power is modulated between two levels, i.e., a recording level and an erasing level, according to the write data, erasing old data and recording new data can be performed simultaneously by irradiating the modulated laser beam at the track of recorded data (Tokukaishou 56-145530). The phase transition type optical disk having the above merits is widely used for recording (i.e., writing) and reproducing (i.e., reading) document files, picture image files and other data files.

The overwritable optical disk usually has a guide track in a spiral or in circles that is detected optically, for high density recording and for necessity of dispersed recording. The optical disk drive (i.e., optical disk reader/writer) irradiates a laser beam focused in a diameter of less than 1 *µ* m to the recording layer on the guide track of the optical disk for writing or reading of data.

It is common to divide a track (17) into sectors (18) to record variable length data effectively. Each sector that has usually a memory capacity of 512 bytes or 1024 bytes including the sector ID area including a track address and a sector address, and a recording area for writing and reading of data. An address portion that indicates a physical address of a sector is preformatted at the manufacturing stage.

Usually, a recording format for data recorded in the recording area includes a synchronizing signal 19a (i.e., VFO) portion for drawing in of PLL (Phase Locked Loop), a data head indicating mark (i.e. DM) added to the head of the write data as a kind of synchronizing signal, a modulated data portion and a resynchronizing signal for word synchronizing. In the process of data recording, an address of a target sector ID (16) is read and the data is written into the recording area of the target sector after detecting the address.

There are two recording methods, i.e., a pulse position modulation and a pulse width modulation. In the pulse position modulation, mark positions are detected for reading of data . On the other hand, both ends of marks are detected in the pulse width modulation. The pulse width modulation has an advantage in record density.

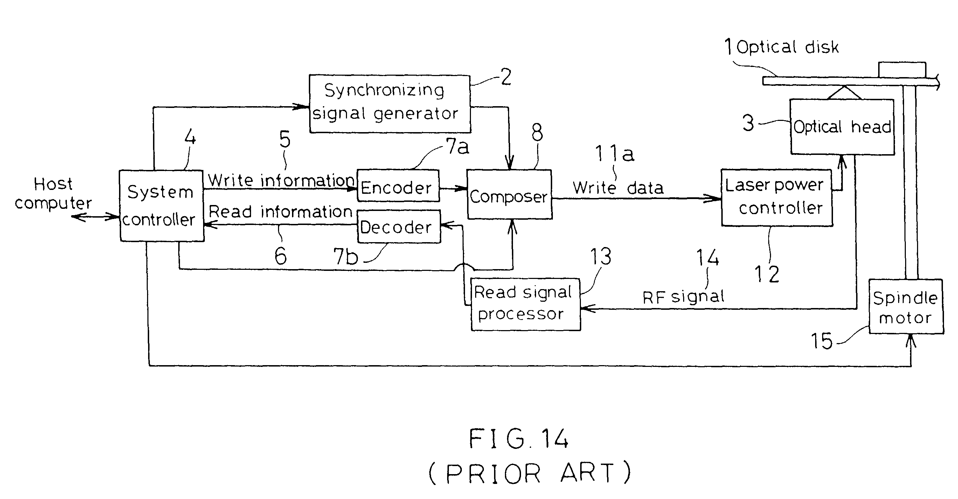

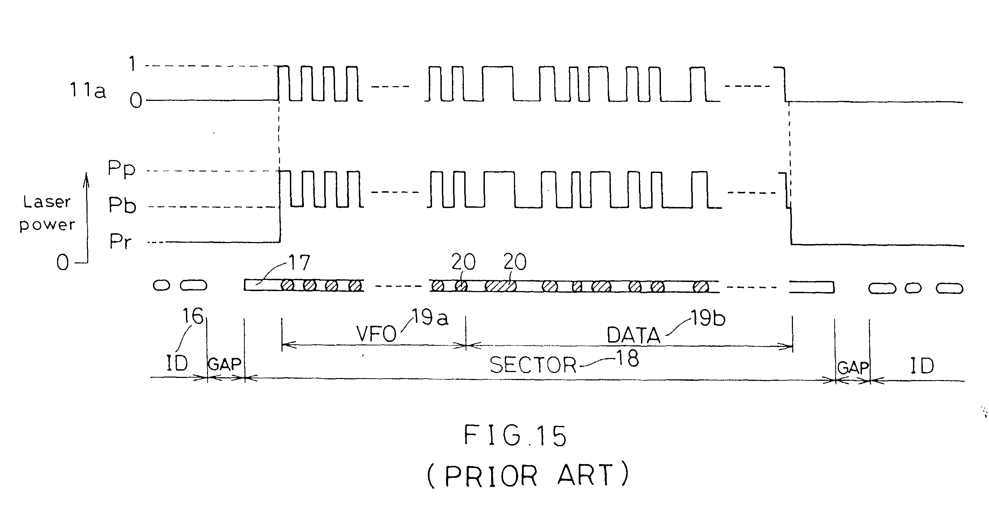

The recording and reproducing method of the phase transition type optical disk in the prior art is explained below, referring Fig.14 and 15. Fig.14 illustrates a block diagram of a reader/writer (optical disk drive) in the prior art. Fig.15 shows write data, a laser power and a recording state of the optical disk for explaining the write operation.

As shown in Fig.14, a system controller 4 connected to a host computer outputs the write information as a binary signal. This write information is provided with error correction information, then encoded in a encoder 7a with e.g., 1-7 RLL. A composer 8 adds a synchronizing signal (VFO) to each data block to be written into each sector so as to generate write data 11a. A laser power controller 12 controls the laser housed in a optical head 3 to modulate the intensity of the laser according to the write data 11a. The system controller 4 also controls a spindle motor 15 to rotate the optical disk.

If the strong laser beam (at laser power Pp) focused by the optical head 3 is irradiated to the recording layer of the optical disk 1 to raise the temperature of the recording layer above its melting point, the spot irradiated by the laser beam is melted and cooled rapidly, and assumes the amorphous state as a recorded mark 20. On the other hand, if the laser beam (at laser power Pb) is focused and irradiated to raise the temperature of the recording layer above the crystalization temperature but below the melting point, the recording layer at the irradiated spot assumes the crystal state. Data recording is performed in the above mentioned way using a difference between the crystal state and the amorphous state.

Data reproducing(reading) from the optical disk is performed using the difference of the optical character of the recording layer between the crystal state and the amorphous state. A weak laser beam (at laser power Pr) is focused and irradiated to the optical disk and a change of a reflected beam is detected as a read RF signal 14 of the recorded data. Then, the signal is converted to a binary signal in a read signal processor 13; it is further processed for decoding and error correction to be a desired read information 6. A similar weak laser beam is irradiated to the optical disk for reading address information when the beam scans the address portion between sectors 18 of the optical disk during the recording process.

However, it is known that repeated recording in a sector of the optical disk of the phase transition type may generate a deterioration that is unique to the phase transition type optical disk. This deterioration causes a reading error. The area of this type of deterioration usually spreads according to the number of times recordings is repeated. Three main patterns of the deterioration are as below:
(1) a defect of the recording layer is generated in a record start portion of a chain of recording areas due to the repeated recording; the defect spreads backward (direction of laser scanning on the disk);
(2) a defect of the recording layer is generated in a record end portion of a chain of recording areas due to the repeated recording; the defect spreads forward (opposite direction of laser scanning on the disk);
(3) a defect of the recording layer is generated in an area where the same pattern mark train is recorded; the defect spreads forward and backward.

Usually rewriting of the optical disk is performed by sectors. Therefore, the whole sector is rewritten even if the recorded data is only changed partly. Especially, a TOC (Table Of Content) area and a directory area of the disk are often written by similar data repeatedly. The above deterioration pattern (3) occurs in such areas.

It is understood that these three patterns of deterioration are all due to a slow migration of the material that forms the recording layer in the laser scanning direction or the opposite direction. However, what drives the recording layer material to migrate during laser irradiation is not known. Some driving forces are conceivable such as surface tension due to a thermal gradient in the recording layer during the laser irradiation or a deformation of the layers making up the optical disk due to a thermal load. If the recording layer has deteriorated, the necessary reflection of the laser beam corresponding to the recorded or non-recorded state of the optical disk cannot be obtained. Some recording methods are proposed to solve these problems so that the performance of rewriting improves. For example, as a solution of the above deterioration pattern (3), there is an optical disk drive that can suppress the deterioration by altering the start position of the VFO recording at every recording (Tokukaishou 63-229625). As a solution of the above deterioration pattern (2), there is an optical disk drive that can suppress the effect of deterioration of the waveform that spreads forward (direction toward the record start point) from the record end point by recording a fixed length of dummy data (Tokukaihei 2-297724).

In the above writing methods of the prior art, the start position of the VFO writing is altered at every writing, or the fixed length of dummy data is added to the end of the data block to suppress the deterioration of the read data due to the repeated recording. Therefore a dummy data area is necessarily added to the record area of the data block. This means that the recording capacity (byte number) is substantially decreased.

The object of this invention is to provide a recording method and apparatus that can suppress the deterioration of the overwritable phase transition type optical disk due to the repeated recording so that the number of possible overwriting is increased.

In order to achieve this object, a first aspect of the recording method of the present invention is characterized in that the write data to be recorded into each sector of the optical information recording medium (i.e., optical disk) includes original write data and dummy data added to the head of the original write data, and that the ratio of the recorded mark distance and the recorded mark length of the dummy data is larger nearer to the head of the dummy data. Similarly, it is preferable to add dummy data following the original write data, and to set the ratio of the recorded mark distance and the recorded mark length of the dummy data larger nearer to the end of the dummy data.

By the above method, the thermal stress to the recording layer as well as the material migration of the recording layer is decreased close to the head or the end of the dummy data. Consequently, concentration of the thermal stress in the recording layer at the record start or end point is avoided, so that the deterioration of the recorded data at the record start or end point due to the repeated recording can be suppressed.

A further aspect of the recording method of the present invention is characterized in that the synchronizing signal and the write data following the synchronizing signal is recorded with a pulse width modulation and that a ratio of a recorded mark distance and a recorded mark length is more than one concerning the mark train recorded at least in a head area of the synchronizing signal. By this method, the thermal stress in the area of the synchronizing signal is smaller than in the area of the write data following the synchronizing signal. As the result, the synchronizing signal can be read correctly after repeated rewriting.

A further aspect of the recording method of the present invention is characterized in that the record starting point of the synchronizing signal in a sector is fixed, and that the length of the synchronizing signal is altered in a predetermined range at every rewriting. By this method, a migration of the deterioration of the recording layer that occurred at the start point of the synchronizing signal to the write data area is avoided, with minimum decrease of the record capacity.

A sixth aspect of the recording method of the present invention is characterized by altering the position of the data head indicating mark in a sector at every writing, recording dummy data after the data block, and altering the length of the dummy data according to the position of the data head indicating mark. By this method, migration of the deterioration of the recording layer that occurred at the end point of the dummy data to the write data area is avoided, with minimum decrease of the record capacity.

A further aspect of the recording method of the present invention is characterized by altering the position of the data head indicating mark at every writing if the linear speed of the recording position on the disk is dependent on the radius of the position, and altering the largest position shift of the data head indicating mark and/or the average length of the synchronizing signal according to the recording radius.

An further aspect of the recording method of the present invention is characterized by altering the average length of the dummy data according to the recording radius if the linear speed of the recording position on the disk is dependent on the radius of the position.

The recording apparatus according to the present invention includes devices for performing the above recording methods.

This invention will be described in detail by following embodiments referring figures, where
Fig.1 is a block diagram illustrating the optical disk drive of a first embodiment according to the present invention;
Fig.2 is a flow chart of the operation performed by the optical disk drive illustrated in Fig.1 for rewriting a sector of the optical disk;
Fig.3 is a timing chart for the write data, the inverted write data, the laser power and the written state of the optical disk in the optical disk drive illustrated in Fig.1;
Fig.4 is a block diagram illustrating the optical disk drive of a second embodiment according to the present invention;
Fig.5 is a flow chart of the operation performed by the optical disk drive illustrated in Fig.4 for rewriting a sector of the optical disk;
Fig.6 is a block diagram of the dummy data generator of the optical disk drive illustrated in Fig.4;
Fig.7 is a timing chart of each signal of the dummy data generator illustrated in Fig.6;
Fig.8 is a timing chart for the write data, the laser power and the written state of the optical disk in the optical disk drive illustrated in Fig.4;

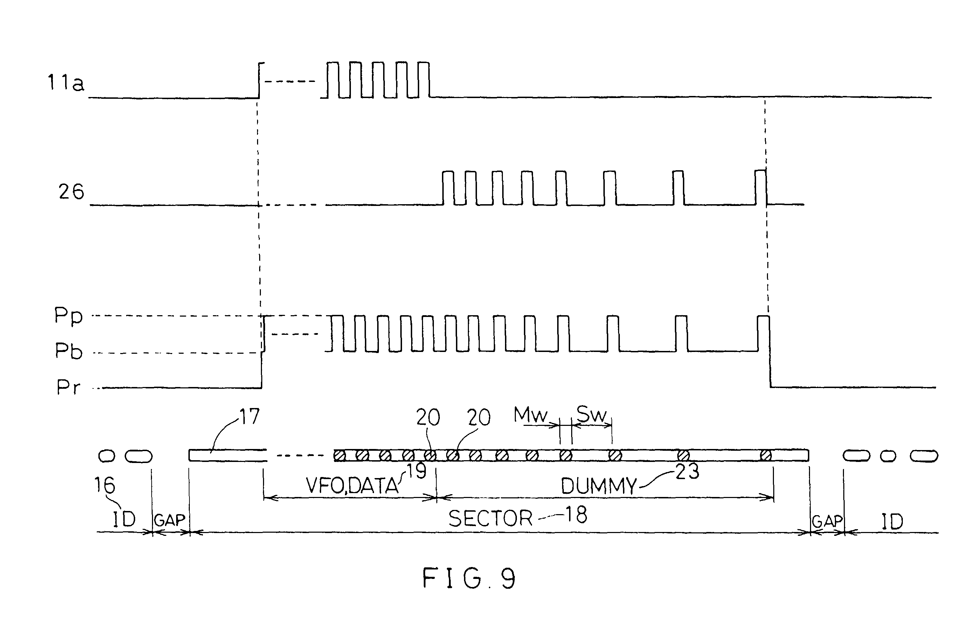

Fig.9 is a timing chart for the write data, the laser power and the written state of the optical disk in a variety of the optical disk drive illustrated in Fig.4;
Fig.10 is a block diagram illustrating a variation of the optical disk drive illustrated in Fig. 4;
Fig.11 is a timing chart for the write data and the laser power of the optical disk in the optical disk drive illustrated in Fig.10;
Fig.12 is another variation of the timing chart for the write data and the laser power of the optical disk in the optical disk drive illustrated in Fig.10;
Fig.13 is a block diagram illustrating another variation of the optical disk drive illustrated in Fig. 4;
Fig.14 is a block diagram illustrating an optical disk drive of the prior art;
Fig.15 is a timing chart for the write data, the laser power and the written state of the optical disk in the optical disk drive illustrated in Fig.14;
Fig.16 is a block diagram illustrating the optical disk drive of a fourth embodiment according to the present invention;
Fig.17 is a chart showing a record format of a sector in the optical disk;
Fig. 18 is a block diagram of the write timing controller of the optical disk drive illustrated in Fig. 16;
Fig. 19 is a timing chart showing the operation of the write timing controller illustrated in Fig.18;
Fig.20 is a chart showing a pattern of the synchronizing signal recorded by the optical disk drive illustrated in Fig.16;
Fig.21 is a block diagram of the write timing controller of the optical disk drive of a fifth embodiment according to the present invention;
Fig.22 is a timing chart showing the operation of the write timing controller illustrated in Fig.21;
Fig.23 is a chart showing a pattern of the dummy data recorded by the optical disk drive including the write timing controller illustrated in Fig.21;
Fig.24 is a block diagram illustrating the optical disk drive of a sixth embodiment according to the present invention.

### First embodiment

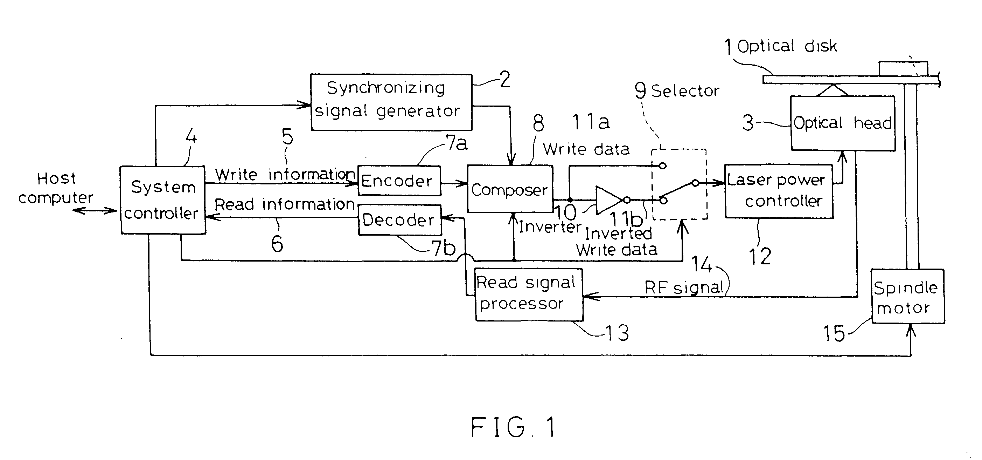

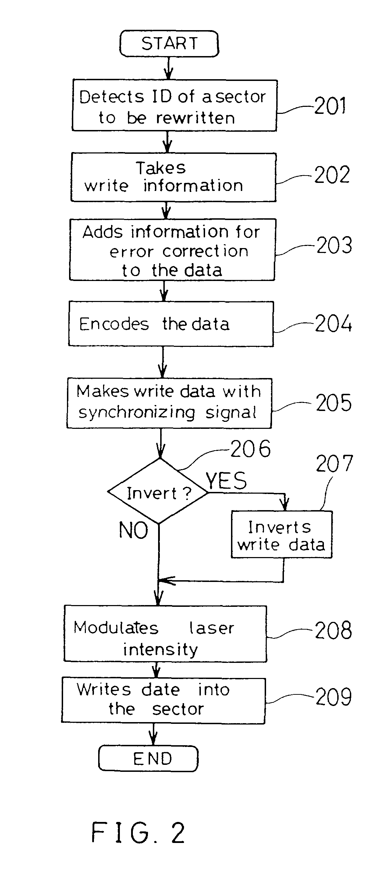

A block diagram of an optical disk drive or an optical disk writer (i.e. recording apparatus) of the first embodiment of the present invention is illustrated in Fig.1 A flow chart of the process to rewrite a sector performed by the reader/writer is illustrated in Fig.2. In step 201, the writer detects ID (address data) of the sector to be rewritten. In step 202, a system controller 4 that is connected to a host computer outputs write information 5 in the form of binary data. This write information 5 is provided with information for error correction in step 203 and it is encoded in step 204. In step 205, each data block to be written in a sector is provided with a synchronizing signal (VFO) and other signals, so that write data 11a is made in a composer 8; the synchronizing signal is generated in a synchronizing signal generator 2. The above operation of this writer is similar to the prior art; the following operation is different.

As shown in Fig.1, the write data lla is divided into two paths; one path connects to a selector 9 directly; another connects to a selector 9 via an inverter 10 that makes inverted write data 11b (step 207 in Fig.2). The selector 9 is triggered by detection of the address data of the sector to be rewritten. It selects the non-inverted write data or the inverted write data at random, and holds the selected data until the data is written into the sector. Therefore it is determined by the selector 9 in step 206 whether the write data is inverted or not before writing.

If a writer that accesses sectors of a optical disk (i.e. optical information recording medium) at random is used, selecting the non-inverted write data or the inverted write data alternately by the selector 9 can generate substantially the same situation as selecting at random. In this case there is no need to provide means such as a random number generator. An output of the selector 9, i.e. either non-inverted write data lla or inverted write data 11b, is given to a laser power controller 12, that performs laser intensity modulation driving a laser housed in a optical head 3 (step 208). Thus the data string is written into the sector of the optical disk.

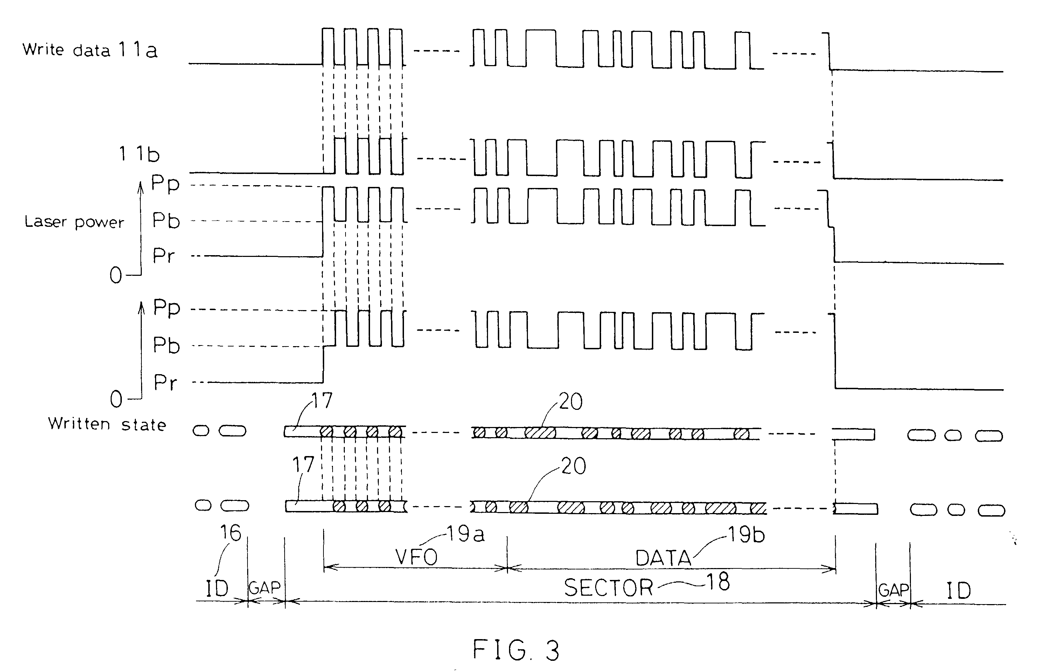

Fig.3 shows an example of a time chart that includes write data, laser power and written state. Laser power when the inverted write data is selected by the selector 9 has an opposite phase to that when the write data lla is selected, concerning the level of Pp and Pb. Consequently, amorphous written marks 20 are formed in the opposite phase to each other on the sector of the optical disk.

Therefore, each position in the sector has substantially the same probability of being formed with a written mark, even if the same information is written repeatedly in a sector. Thus damage due to the repeated rewriting in the particular position does not occur.

A concrete example will be explained below. The substrate of the optical disk whose diameter is 130 mm was made of polycarbonate. This polycarbonate substrate was preformatted with uneven phase pits as address information and guide grooves for writing were formed in a sector area. A reflection layer, a photosensitive layer and a protection layer were formed on the substrate. Then, a protecting plate was bonded thereto. The reflection layer was formed with Al; the protection layer was formed with ZnS-SiO₂; the photosensitive layer was formed with Te-Sb-Ge.

The optical disk made by the above process was rotated at a linear speed of 5 meters per second. A laser beam that has a 680 nm wave length was focused on the disk for writing by using a lens that has the numerical aperture (NA) of 0.6. The laser power for reading and writing was adjusted to Pp=11mW, Pb=4mW and Pr=1mW. Pulse width modulation (PWM) with 1-7 RLL (Run Length Limited) was used for write data modulation. The shortest mark length and the shortest mark distance were set both at 0.6 *µ* m.

After rewriting the same information into the same sector repeatedly using the above conditions, the jitter value was measured. The measurement was performed in five different numbers of rewriting times, i.e. one, ten, a hundred, a thousand and ten thousand. The information written in a sector had 2970 bytes.

Table 1 shows a comparison of jitter values in this example (example 1), in another example that will be explained later, and in the prior art. In this table, σ represents standard deviation of jitter values on zero cross point of read data signal; Tw represents the window width of the detecting system.

**Table 1**

| Jitter (σ/Tw) | | | | | |
|---|---|---|---|---|---|
| Times of rewriting | 1 | 10 | 100 | 1,000 | 10,000 |
| Prior art | 6.4 | 7.3 | 7.4 | 8.5 | 12.8 |
| Example 1 | 6.2 | 7.1 | 7.0 | 7.4 | 8.3 |
| Other example | 6.2 | 7.2 | 7.1 | 7.2 | 7.6 |

As seen in Table 1, the jitter value in the prior art increases as the number of times of rewriting increases. However, the increasing rate of the jitter value in example 1 by this invention is much lower than in the prior art. This means that deterioration of the read data signal due to repeated rewriting is suppressed in this embodiment of the invention.

If a method disclosed in Tokukaihei 2-94113 that varies a write start point at random, and the method of the above embodiment of this invention are combined, deterioration of the photosensitive layer may further be suppressed, since the probability of forming a boundary between the area melted/hardened repeatedly and the non-melted area may be substantially uniform over the whole writing area. Such a configuration can be obtained by adding a delay circuit that can control the delay time by steps next to the composer 8, and changing the delay time at random in each sector rewriting. Jitter values of the "other example" in Table 1 are measured in this configuration. It is clear that the increasing rate of the jitter value in the other example is lower than in example 1.

In this embodiment, written mark distance is not varied when write data are inverted, since pulse width modulation is used. Therefore, one decoding method can be used for both non-inverted write data and inverted write data, so the decoder circuit does not need to be complicated.

### Second embodiment

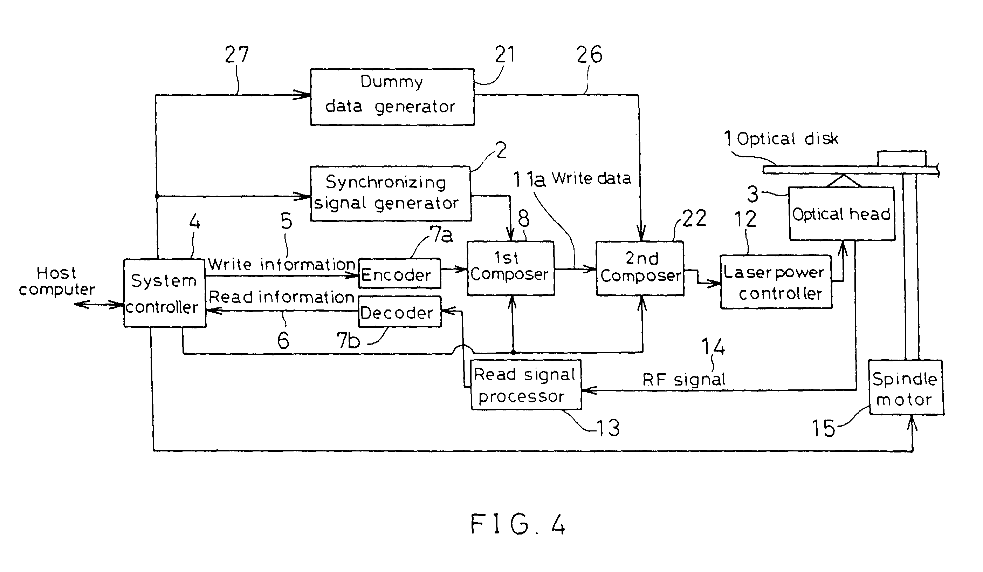

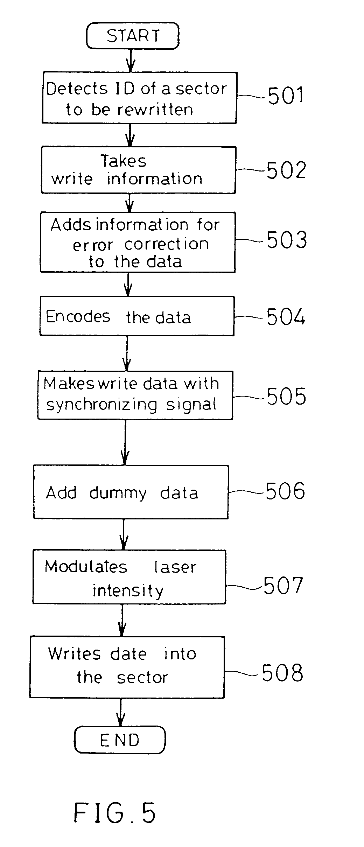

Fig.4 illustrates a block diagram of a reader/writer as the second embodiment of the present invention. A flow chart of the process to rewrite a sector performed by this writer is illustrated in Fig.5. After detecting ID (address data) of the sector to be rewritten in step 501, a system controller 4 that is connected to a host computer outputs write information 5 in the form of binary data (step 502). This write information 5 is provided with an information for error correction in step 503 and it is encoded in step 504. In step 505, each data block to be written in a sector is provided with a synchronizing signal (VFO) and other signals, so that write data 11a are made in a composer 8. Laser intensity is modulated according to this write data (step 507). The laser beam is focused on the optical disk, and thus the data are written into the sector of the optical disk. The above operation of this reader/writer is similar to the prior art; the following operation is different.

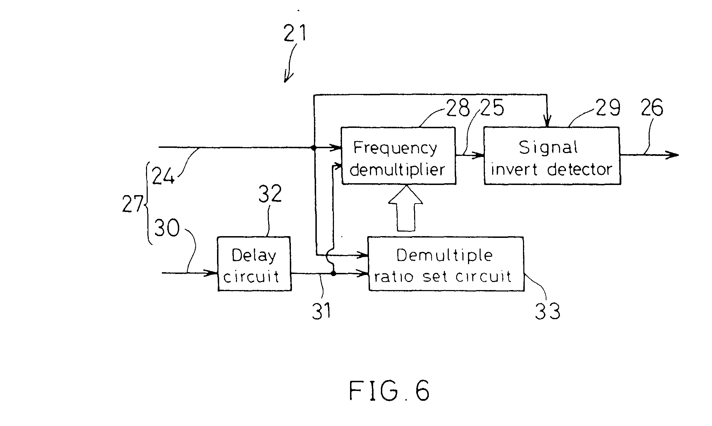

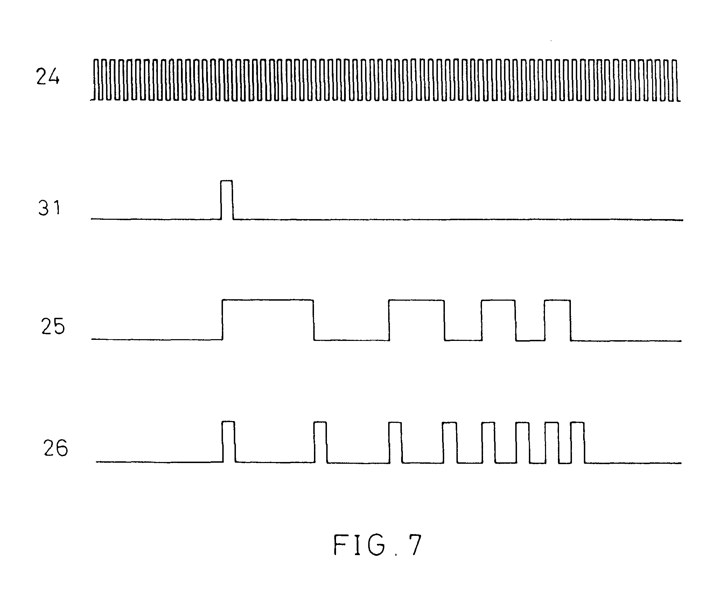

A dummy data generator 21 generates dummy data that is added to the head to the writing data and a second composer 22 composes the write data and the dummy data (step 506). The composed data are given to a laser power controller. Dummy data means data that are added to the original write data, including the synchronizing signal. An example of the configuration of the dummy data generator 21 is illustrated in Fig. 6. Wave forms of signals in the circuit illustrated in Fig. 6 are shown in Fig.7.

Dummy data generating signals 27 from a system controller 4 are given to the dummy data generator 21. These signals 27 include a clock signal 24 that corresponds to the narrowest pulse width and an address information detecting signal 30. The clock signal 24 is inputted to a frequency demultiplier 28, a demultiple ratio set circuit 33 and a delay circuit 32. The proper delay time for adding dummy data to the head of the write data is set in the delay circuit 32. When an output signal 31 of the delay circuit 32 is added to the frequency demultiplier 28 and the demultiple ratio set circuit 33, demultiplying of the clock signal 24 starts.

The demultiple ratio set circuit 33 provide the frequency demultiplier 28 with a demultiple ratio setting signal that decreases the demultiple ratio slowly. Thus, the frequency demultiplier 28 outputs the pulse signal 25, whose period decreases slowly as shown in Fig.7. This pulse signal 25 is given to an invert signal detector 29 that generates a pulse signal whose pulse width corresponds to several clock signals when the pulse signal is inverted. This pulse signal becomes dummy data 26.

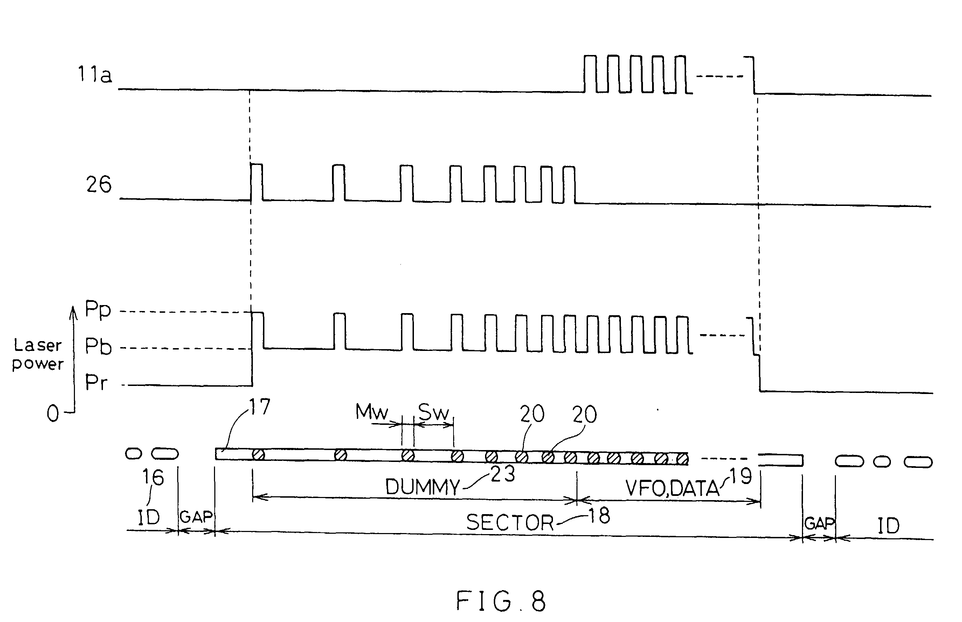

Fig.8 shows an example of a time chart that includes write data, laser power and written state by this writer. As known from Fig. 8, the ratio of the pulse interval and the pulse width, i.e., the ratio of a mark distance (for spacing) Sw and a mark length Mw, is larger at the position closer to the head of the dummy data.

Therefore thermal stress is smaller in a portion closer to the head of the dummy data, so that material migration of the photo-sensitive layer is smaller in the portion closer to the head of the dummy data. Consequently, this avoids the damage of the photo-sensitive layer concentrating at a start point of the written data, and the deterioration of the photo-sensitive layer occurring due to repeated rewriting.

A concrete example will be explained below. The optical disk, modulation system and laser power are the same as in the before mentioned example. A random signal was used as the write information. The write data with the dummy data as shown in Fig. 8 were rewritten thirty thousand, fifty thousand, seventy thousand and a hundred thousand times. Then, the length of the deterioration area whose read signal is distorted in the head of the write data including the dummy data was measured. The length of the dummy data is 50 *µ*m on the disk. The ratio of the mark distance Sw and the mark length Mw was set larger in the portion closer to the head of the dummy data.

Table 2 shows a comparison of the length of deterioration area measured in this example (example 2), in another example that will be explained later, and in the prior art.

**Table 2**

| Length of the deterioration area (µm) | | | | |
|---|---|---|---|---|
| Times of rewriting | 30,000 | 50,000 | 70,000 | 100,000 |
| Prior art | 5 | 10 | 55 | 105 |
| Example 2 | 0 | 5 | 10 | 50 |
| Other example | 0 | 0 | 10 | 30 |

As seen in Table 2, the length of the deterioration area in this example is shorter than in the prior art. This means that deterioration of the photo-sensitive layer due to repeated rewriting is suppressed in this embodiment of the invention.

In this embodiment, dummy data are added to the head of the write data corresponding to the case in which deterioration of the photo-sensitive layer tends to occur in the head portion of a sector. However, it is also possible that the deterioration tends to occur in the tail portion of the sector due to the layer construction of the optical disk. In this case, the deterioration is suppressed by adding dummy data to the end of the write data, and by setting the ratio of the mark distance Sw and the mark length Mw larger in the portion closer to the end of the dummy data.

The dummy data in these embodiments have a constant mark distance Sw and a variable mark length Mw. However, it is possible to fix the mark length Mw and alternate the mark distance Sw. Any other pattern such as random signal pattern or DC signal pattern can be used as long as it can soften the sudden change in thermal stress to the photo-sensitive layer at the start or the end point of writing.

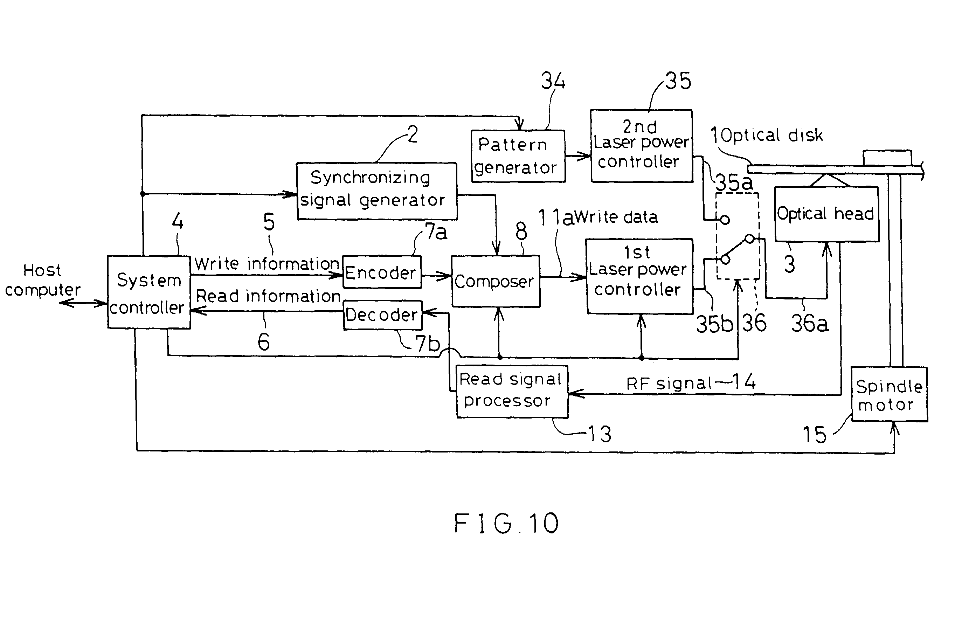

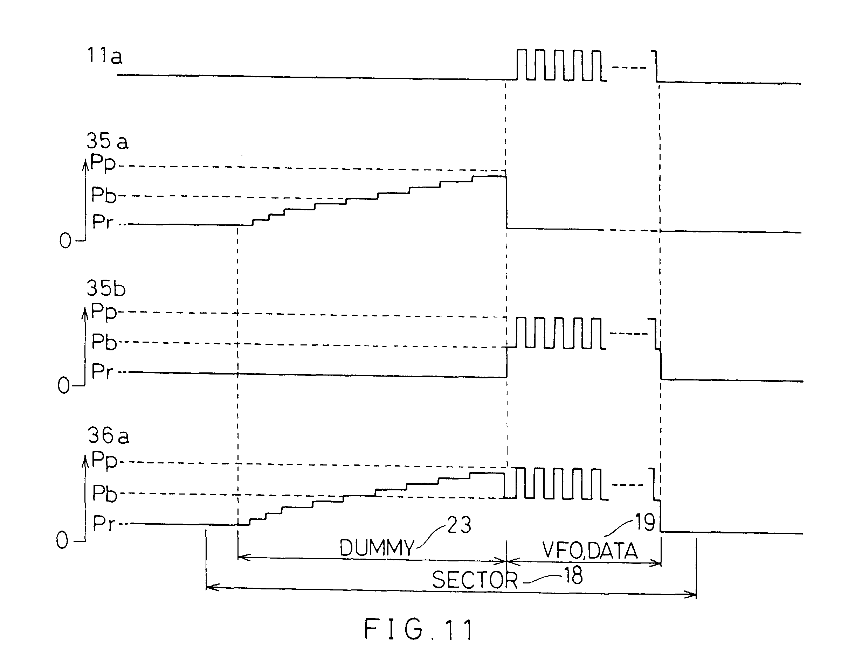

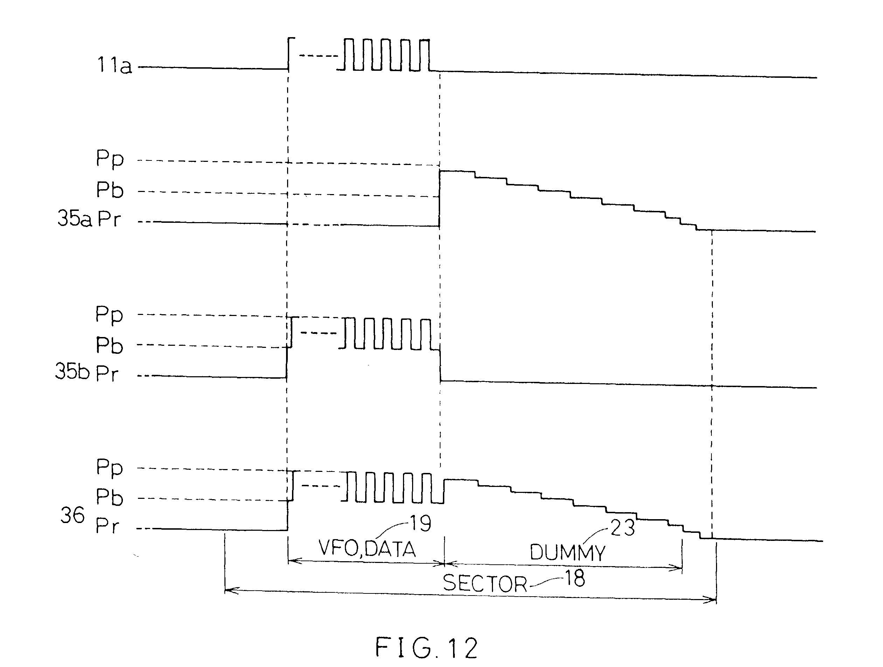

The configuration of Fig.10 does not include the dummy data generator 21 and the second composer 22 illustrated in Fig.4, but includes a pattern generator 34 that increases or decreases the intensity of the laser power step by step, a second laser power controller 35 and a selector 36 for switching the first and second laser power controller. As shown in Fig.11 or 12, the laser intensity is increased or decreased slowly in the dummy portion connected to the head or the tail of the write data portion 19, and the selector 36 is switched, so that the modulated laser intensity waveform 36a is gained. This laser intensity waveform 36a can be used to perform the same effect as the above mentioned embodiment where the start point of writing in a sector is altered at random.

It is also preferable to combine this embodiment and the above mentioned embodiment. This result is showed in Table 2 as the "other example". It can be seen that the deterioration of the photo-sensitive layer is suppressed more effectively in the other example by decreasing the thermal stress in the head of the dummy data more smoothly.

The length of the dummy data string can be altered at random in every rewriting to get the same effect as altering the start point of writing at random.

In this embodiment, the mark distance as well as the mark length in the end of the dummy data is set identically as in the synchronizing signal portion for preventing the rapid change in thermal stress between the dummy data and the synchronizing signal portion, so as to suppress the deterioration of the photo-sensitive layer from the head of the synchronizing signal portion.

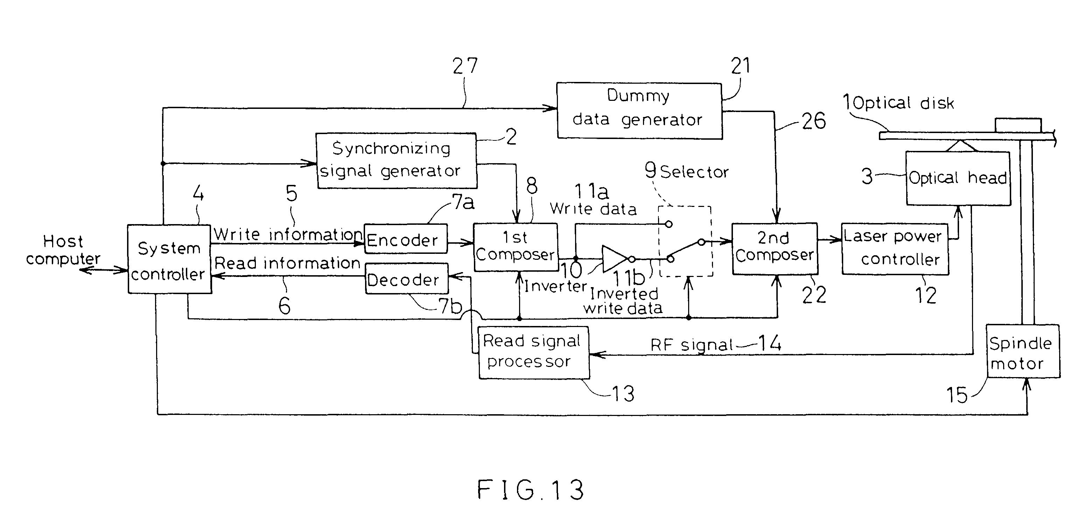

It is more preferable to combine the method of adding the dummy data to the head of the write data as in this embodiment and the method of inverting the write data at random mentioned in the first embodiment. This configuration, illustrated in Fig.13, suppresses the deterioration of the photo-sensitive layer at the head or the end of the write data as well as in the write data, so that the optical disk has a longer life.

### Third embodiment

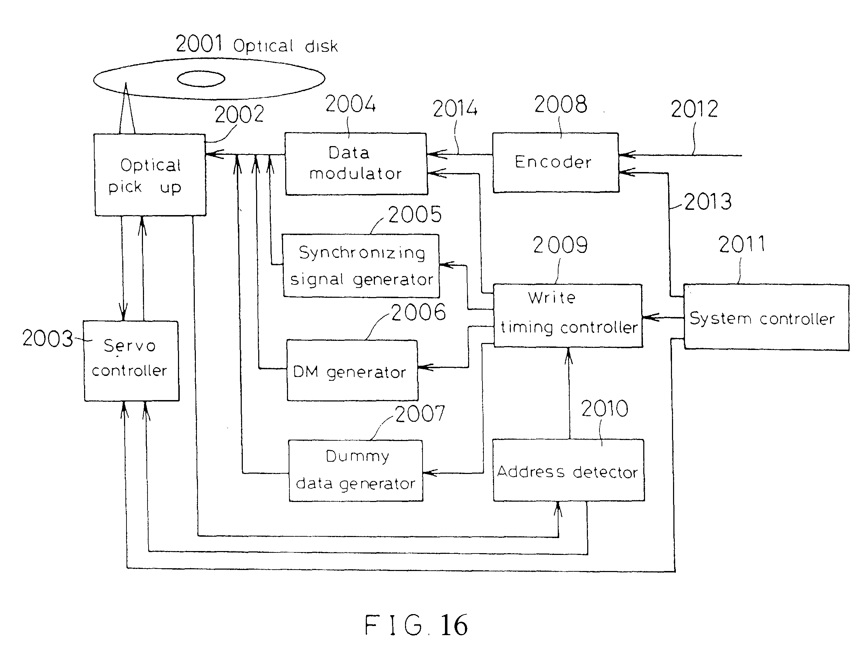

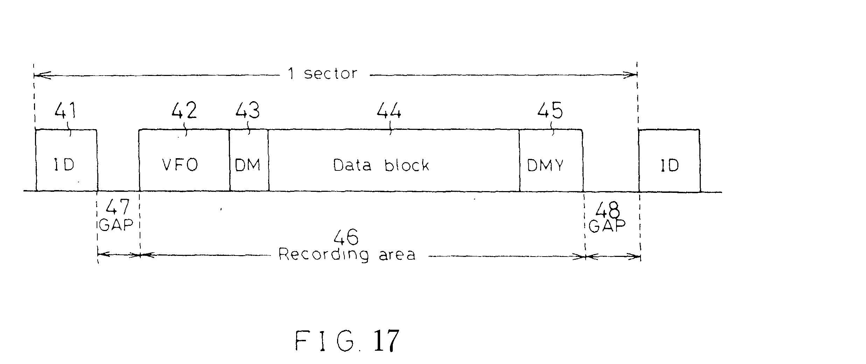

A block diagram of a writer as a third embodiment of the invention is illustrated in Fig.16. A format of the writing sector of the optical disk is illustrated in Fig.17. In this figure, numeral 41 represents an ID that contains address information of the sector; 42 represents a synchronizing signal (VFO) for drawing in of PLL; 43 represents a data head indicating mark DM; 44 represents a data block encoded with an error detection code; 45 represents a dummy block DMY written after the data block 44. There are gaps 47 and 48 between the ID areas and the data writing area 46 where the data represent written, read or erased. The gaps are needed for dealing with a rotation fluctuation. The dummy block DMY can be eliminated if the necessity of frequent rewriting is low. In the first to third embodiments, the data head indicating mark DM is included in the original data.

In Fig.16, numeral 2001 represents an optical disk; 2002 represents an optical pick-up that follows a guide track of the optical disk 2001 to irradiate a laser beam on the recording surface for writing, reading and erasing; 2003 represents a servo controller that controls a position of the optical pick-up to focus the laser beam at the desired point on the optical disk; 2004 represents a data modulator that modulates the write data to a suitable form for recording; 2005 represents a synchronizing signal generator that generates the synchronizing signal (VFO) for drawing in of a PLL; 2006 represents a DM generator that generates the data head indicating mark DM; 2007 represents a dummy data generator; 2008 represents a encoder that encodes the data with error detection code; 2009 represents a write timing controller; 2010 represents an address detector that detects a target address from a sector ID 21; 2011 represents a system controller that controls the whole system with a microprocessor.

The above configured optical disk writer operates as follows. The system controller gives the address of the target sector to be written to the servo controller 2003. The servo controller 2003 compares the target address with an address from the address detector so as to control the position of the optical pick-up. The system controller 2011 gives an encode instruction 2013 to the encoder 2013 as well as a write instruction to the write timing controller.

The encoder 2008 encodes the data 2012 with an error detection code according to the encode instruction 2013, and gives the encoded data 2014 to the data modulator 2004 that modulates the encoded data 2014.

The write timing controller 2009 is triggered by the write instruction from the system controller 2011. It gives triggering instructions to the synchronizing signal generator 2005, the DM generator 2006, the data modulator 2004 and the dummy data generator 2007 in turn after the address detector 2010 detects the target address. The data are thus written into the recording area 46 of the sector. In the above series of operations, the synchronizing signal generator 2005 generates the synchronizing signal and the dummy data generator 2007 generates the dummy data. The dummy data generator 2007 can be eliminated if the necessity of frequent rewriting is low.

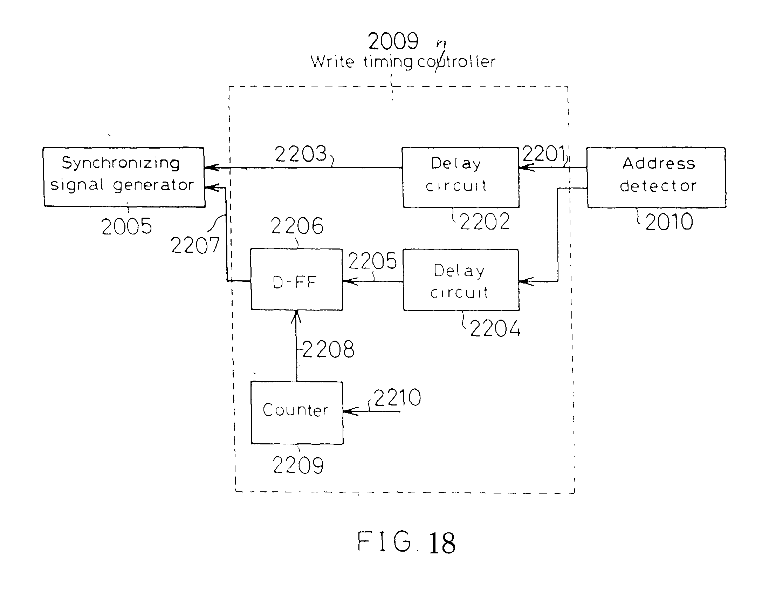

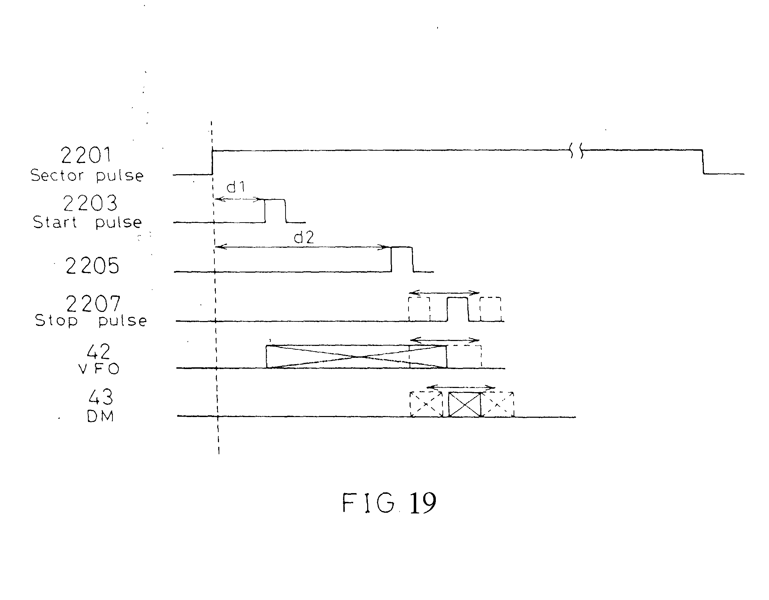

Fig.18 illustrates a part of the write timing controller 2009. This part gives the trigger instruction to the synchronizing generator 2005. A timing chart of the operation is shown in Fig.19.

A sector pulse 2201 that indicates the sector is withdrawn from the address signal that the address circuit 2010 has obtained. This sector pulse 2201 is sent to the delay circuit 2202 to be a start pulse 2203 with predetermined delay time dl. The start pulse 2203 is sent to the synchronizing signal generator 2005 that generates the VFO. Identical delay times are provided for the identical sector to start writing the VFO from the identical place on the optical disk. On the other hand, the sector pulse 2201 is sent also to another delay circuit 2204, where the pulse is provided with a predetermined delay time d2 to be a start pulse 2205. The delay time d2 is larger than d1.

The counter 2209 demultiplies a clock input signal 2210 into a clock signal 2208 with a suitable period that is asynchronous with a data input pulse 2205. This clock signal 2208 is given to a D-type flip-flop (D-FF) 2206, which latches the pulse 2205 and outputs a stop pulse 2207 to the synchronizing signal generator 2005. A random delay time is added to the stop pulse 2207 due to the period of the clock signal 2208 that is asynchronous with a data input pulse 2205. Therefore the synchronizing signal generator 2005 alters the stop point of the synchronizing signal at random. The write timing controller 2009 gives the trigger instruction to the synchronizing signal generator 2005, then sends the trigger instruction to the DM generator 2006 synchronizing with the stop pulse 2207, and thus the data head indicating mark is recorded.

As explained above, this embodiment can alter the length of the VFO at random without changing the start point of VFO writing by providing the D-FF before the synchronizing signal generator when rewriting is performed repeatedly.

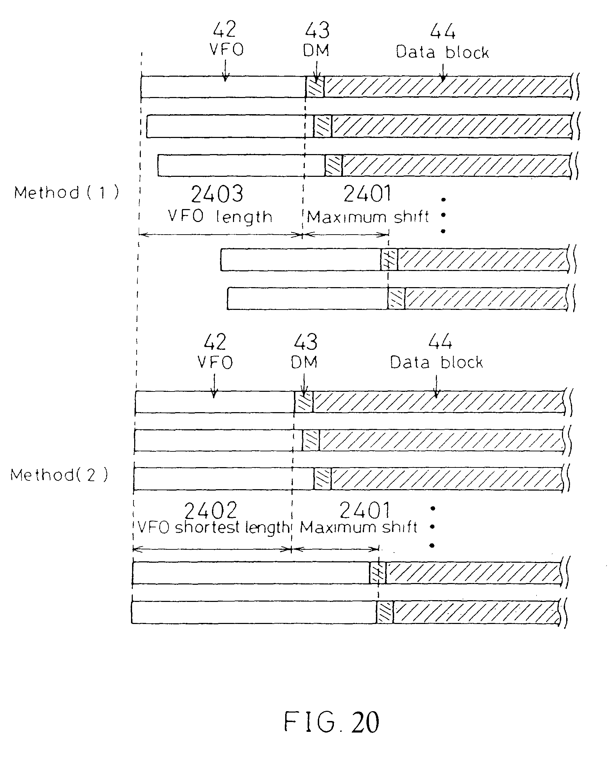

The suppression effect of the deterioration of the read waveform due to repeated rewriting in a sector will be explained below comparing between prior art and this embodiment. Fig.20 shows the place where the VFO is recorded in a sector. Method(1) is a method of the prior art where the start point of VFO writing is altered at random; Method(2) is a method of this embodiment where the length of VFO is altered at random without changing the start point of VFO writing. In Fig. 20, the end position of the VFO 42 is altered from the nearest to the farthest in order, but actually, it is altered at random. The maximum position shift 2401 in Method(1) is identical with that in Method(2).

The VFO shortest length 2402 of the Method(2) in Fig.20 is determined as below. The deterioration of the read waveform due to the repeated rewriting exists from the start point of VFO writing. The deterioration progresses in the direction that the laser beam is moved according to the increasing number of rewrite times. Therefore, the VFO shortest length 2402 is set such that at least the end of VFO can be read after the expected maximum times of rewriting have been performed and drawing in of the PLL can be done correctly.

There is no difference between Method(1) of the prior art and Method(2) of this embodiment concerning the range where the end point of the VFO 42 is altered at random if the VFO length 2403 in Method(1) is set identical with the VFO shortest length 2402 in Method(2). However, compared with Method(1) where the length of the VFO is fixed, Method(2) of this embodiment, where the length of VFO varies at random from the shortest length 2402 to the longest length that is sum of the shortest length 2402 and the maximum position shift 2401, has an advantage as described below. An average length of the VFO in Method(2) is longer than the fixed VFO length 2403 in Method(1) by the length that corresponds to a half of the maximum position shift 2401. On the other hand, the deterioration due to the repeated rewriting begins at the start point of writing, i.e. the start point of VFO. Therefore, it takes a longer time for the deterioration to reach the DM at the head of the data in Method(2) than in Method(1) because the average length of the VFO in Method(2) is longer than the fixed VFO length in Method(1). This means the maximum times of rewriting can increase (the life cycle is expanded).

From another view point, the effective memory capacity of the optical disk can be expanded in Method(2) of this embodiment versus Method(1) of the prior art for the identical number of rewriting times, since the length to be reserved for VFO can be shortened in Method(2). This invention can be applied if a certain data string followed by the VFO exists at the starting point of the recording area. There is a case, for example, where dummy data are written before the VFO. In this case, the above effect is obtained by arranging the start position of VFO writing and recording the VFO with its end point altered at random.

### Fourth embodiment

Next, a fourth embodiment will be explained. As mentioned above, by writing the data with the end point of the VFO altered at random, the data can be read correctly even if data in the same pattern are rewritten repeatedly in a sector. In this case, the end position of data writing alters on the optical disk at random even if the byte number of the data does not vary. The end position of data writing has a fixed distance from the end position of the VFO, i.e. the record position of the data head indication mark DM, if the rotation fluctuation of the optical disk is very small. Therefore, the end position of data writing on the optical disk alters at random according to the data head indicating mark DM. The reader/writer is provided with means for changing the the length of the dummy data according to the position of the data head indicating mark such that the length of the dummy data string is shortened as the DM shifts behind and lengthened as the DM shifts forward. It is desirable that the end position of the dummy data writing does not change on the optical disk.

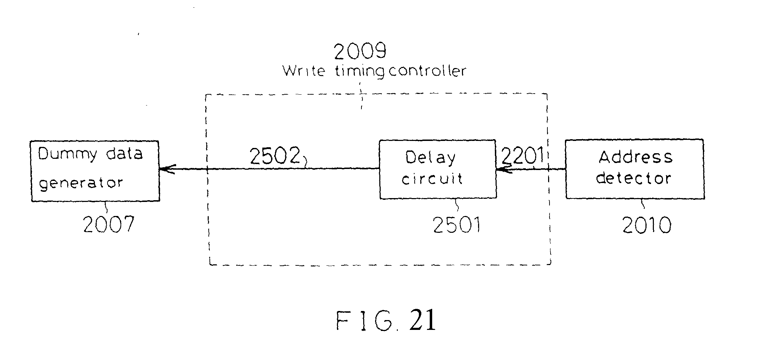

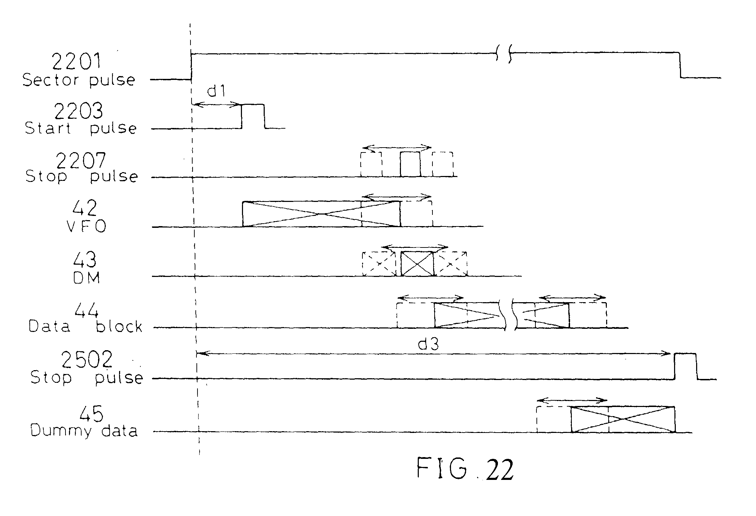

Fig.21 illustrates an example of a part of the write timing controller 2009 illustrated in Fig.16, which controls write timing of the dummy data. The timing chart of the operation is showed in Fig.22.

As mentioned above, the write timing controller 2009 gives trigger instructions to the synchronizing signal generator 2005, DM generator 2006, the data modulator 2004 and the dummy data generator 2007 in turn after the address detector detects the target address. Either the start pulse 2203 given to the synchronizing signal generator or the stop pulse 2207 is provided with a random delay time. Fig.22 shows a case where the stop pulse 2207 is provided with the random delay time. On the other hand, the delay circuit 2501 of the write timing controller 2209 outputs a stop pulse 2502 to the dummy data generator 2007 at predetermined delay time d3 after receiving a sector pulse that indicates the sector period. After receiving the stop pulse 2502, the dummy data generator 2007 stops generating the dummy data. The delay time d3 generated in the delay circuit 2501 may be determined such that the deterioration of the read waveform at the end of the written data after writing repeatedly certain expected times can be absorbed in the dummy data so as to give no effect to the read data of the data block 44. Essentially, this embodiment provides the same end position of writing dummy data by means of the delay circuit 2501. However, it is not always possible to make the same end position of writing dummy data since the motor for rotating the optical disk has a certain flutter.

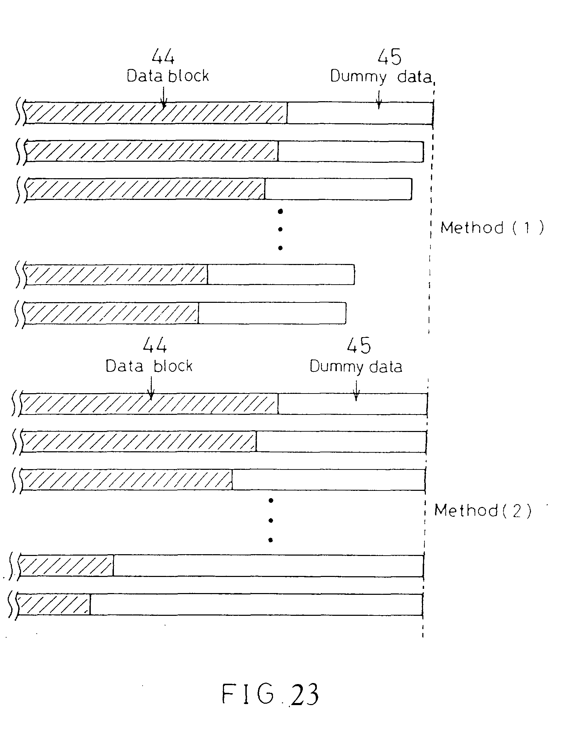

The comparison between the prior art and this embodiment concerning the deterioration suppression effect of the read waveform at the end of the write area after rewriting repeatedly at a sector will be explained below. Fig.23 shows the variation of the dummy data position when writing repeatedly in a sector. Method(1) is the writing method in the prior art where the length of the dummy data 45 is not varied. Method(2) is the method in this embodiment where the length of the dummy data is varied such that the end position of the dummy data 45 is not varied on the disk. In Fig.23, the position of the data head indicating mark is varied from the nearest to the farthest in order, but actually, it is varied at random.

If the shortest length of the dummy data 45 in Method(2) is set identical with the fixed length of the dummy data in the prior art, the Method(2) of this embodiment has an advantage because of the reason below. The average length of the dummy data 45 is longer than the fixed length of the dummy data 45 in the prior art. On the other hand, the deterioration due to the repeated recording starts from the end point of writing. Therefore the repeated recording life, i.e. the time when the deterioration reaches the end of the data block 44, is longer in this embodiment than in the prior art.

### Fifth embodiment

Next, a fifth embodiment will be explained. This embodiment is applied to the optical disk drive such that the optical disk is rotated at a constant revolution independently of the radius of the sector to be recorded. In this optical disk drive, linear speed of the irradiated point by the laser beam (i.e. writing point at present) changes according to the radius thereof.

Some experiments for finding how the linear speed at writing is related to the deterioration due to repeated rewriting were performed. First, it became clear that a small change in the disk construction, i.e. thickness of each layer, material composition, linear speed at writing, laser power or record density, results in a big change of the deterioration phenomenon due to repeated rewriting. This can be understood from the following facts;
(1) temperature profile (e.g. temperature to be reached, cooling speed after temperature increase) is affected strongly by the linear speed;
(2) an asymmetry of the temperature profile at the laser irradiated part is one of driving forces to create the deterioration of the read waveform due to the repeated rewriting.

The dependence of the deterioration phenomenon due to the repeated rewriting on the linear speed at writing could not be eliminated by changing the laser power or irradiation period according to the linear speed at writing, or by altering the disk construction according to the disk radius.

It is desirable for an optical disk system that the laser irradiation profile or the disk construction be adjusted so that a sum of deterioration lengths of the read signal due to the repeated rewriting at the head and the end of a chain of writing areas become as short as possible from the viewpoint of memory capacity. By the above experiment, the ratio of the deterioration length of the read waveform at the head and that at the end of the recording area due to the repeated writing was found to be varied usually according to the linear speed of writing. It is also found that the relationship of the above ratio and the linear speed of writing can not be defined as a linear function. The length of the synchronizing signal and the dummy data such that the deterioration of read waveform due to the repeated writing can not effect the reproduction of the data block is found to have the most adequate value that is unique to each disk system and that corresponds to the linear speed.

It is also found that the largest shift of the writing start point (the distance of data head indicating marks recorded nearest and farthest with the respect to ID) has the most adequate length corresponding to the linear speed of writing. The relationship of the most adequate largest shift of the data head indicating mark and the linear speed could not be defined as a linear function. The above mentioned method such as altering the length of the VFO at random without altering its start position of writing or altering the start position of VFO writing at random without altering its length can be used for altering the position of the data head indicating mark.

It is understood from the above mentioned experiment that the following three writing methods are effective for suppressing the deterioration of the read waveform:
(1) writing in turn the VFO, the data head indicating mark, encoded data, and dummy data if necessary, and altering the position of the data head indicating mark at random;
(2) writing while selecting the largest shift of the data head indicating mark and/or the average length of the synchronizing signal in a sector adequately corresponding to the linear speed at writing;
(3) writing while selecting the average length of the dummy data in a sector adequately corresponding to the linear speed at writing.

Usually, in an actual optical disk drive, the linear speed and the radius at writing correspond with each other. Therefore, the above Method(2) or (3) is performed by providing the optical disk drive with a conversion table of the most adequate largest shift of the data head indicating mark and/or the average length of the VFO and the average length of the dummy data for each recording radius, and writing a certain area according the conversion table.

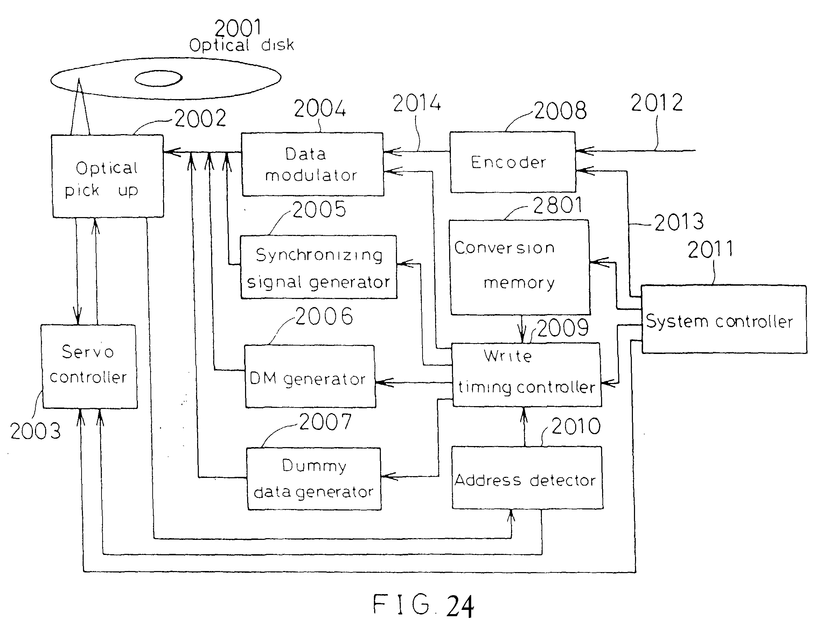

A block diagram of an optical disk drive as a fifth embodiment of the invention is illustrated in Fig.24. This optical disk drive can also record data in the record format illustrated in Fig.17. The optical disk drive illustrated in Fig.24 has a conversion memory 2801 that is used for conversion of the address, the synchronizing signal and recording method of the dummy data. The conversion memory 2801 is written with the most adequate largest shift of the data head indicating mark, the length of the VFO and the dummy data, and the end position of dummy data recording.

The above mentioned optical disk drive operates as below. The system controller 2011 gives the address of the target sector to be recorded to the servo controller 2003 and the conversion memory 2801. The servo controller 2003 compares the target address with an address detected by the address detector 2010 to control the position of the optical pick-up. The conversion memory 2801 gives the record format data corresponding to the target address to be recorded to the write timing controller 2009. The system controller 2011 gives an encoding instruction 2013 to the encoder 2008, and a writing instruction to the write timing controller 2009. The encoder 2008 encodes the data to be written 2012 with the error correction code and outputs the encoded data to the data modulator 2004. The data modulator 2004 modulates the encoded data 2014. The dummy data generator 2007 can be eliminated if the necessity of repeated writing is low.

The write timing controller 2009 gives trigger instructions in turn to the synchronizing signal generator 2005, the DM generator 2006, the data modulator 2004 and the dummy data generator 2007 according to the data from the conversion memory 2801 to record in turn the synchronizing signal that gives the most adequate largest shift of the data head indicating mark, modulated data, and the dummy data in the adequate length into the sector recording area 46. The address detector 2010 can give the address signal detected to the conversion memory 2801 just before the writing on behalf of the system controller 2011. Further, it is possible to prerecord the address and the writing method of VFO & dummy data table in the optical disk in spite of providing the conversion memory 2801 in the optical disk drive, and to write according to the information of the table.

As mentioned above, this embodiment can write while selecting the most adequate largest shift of the data head indicating mark and/or the average length of the synchronizing signal and the average length of the dummy data by providing the conversion memory for converting of the address and the recording method of VFO and dummy data. Consequently, the substantial recording capacity of the optical disk can be expanded without being affected by the deterioration of the read waveform due to the repeated rewriting.

## Claims

1. A recording method for an optical information recording medium in which a light beam is irradiated to change a state of a photo-sensitive record layer, comprising providing write data to be recorded into each sector (18) of the optical information recording medium characterised in, that the write data include original data (11a) and dummy data (26, 45) added to the head of the original write data (11a), and that a ratio of a recorded mark distance and a recorded mark length for the dummy data (26, 45) is selected which is larger nearer to the head of the dummy data (26, 45).

2. The recording method for an optical information recording medium according to claim 1, wherein a synchronizing signal (42) is included at the head of the original write data (11a), and wherein a recorded mark distance and a recorded mark length at the end of the dummy data (26, 45) are identical with a recorded mark distance and a recorded mark length of the synchronizing signal (42).

3. A recording method for an optical information recording medium in which a light beam is irradiated to change a state of a photo-sensitive record layer, comprising providing write data to be recorded into each sector (18) of the optical information recording medium characterized in that the write data includes original write data (11a) and dummy data (26,45) following the original write data (11a), and selecting a ratio of a recorded mark distance and a recorded mark length for the dummy data (26, 45) that is larger nearer to the end of the dummy data (26, 45).

4. The recording method for an optical information recording medium according to claim 1, wherein a start point of recording in each sector (18) is altered at random.

5. The recording method for an optical information recording medium according to claim 1, further comprising the steps of
deciding at random to invert or not to invert write data (11a) that has a predetermined block length;
inverting the write data (11a) if the decision is to invert the write data (11a); and
recording either the non-inverted write data or the inverted write data (11b) into the photo-sensitive record layer.

6. A recording method for an optical information recording medium in which a light beam is irradiated to change a state of a photo-sensitive record layer, wherein write data to be recorded into each sector (18) of the optical information recording medium includes original write data (11a) and a synchronizing signal (42) added to a head of the original write data, **characterized in, that** the ratio of a recorded mark distance and a rcorded mark length is more than one for the mark sequence recorded at least in a head area of the synchronizing signal (42).

7. The recording method for an optical informatin recording medium according to claim 6, wherein a ratio of a recorded mark distance and a recorded mark length is more than 1.5 for the mark sequence recorded at least in a head area of the synchronizing signal (42).

8. The recording method for an optical information recording medium according to claim 6, wherein dummy data (26,45) are recorded following the original write data (11a).

9. The recording method for an optical information recording medium according to claim 6, wherein dummy data (26, 45) are recorded between the synchronizing signal (42) and the original write data (11a).

10. The recoding method for an optical information recording medium according to claim 6, wherein the synchronizing signal (42) is recorded such that a distance of head points of adjacent marks is constant, and wherein reproduction of the synchronizing signal (42) is performed by detecting the head points of each mark, and wherein the original write data (11a) following the synchronizing signal (42) are recorded and reproduced with pulse width modulation.

11. The recording method for an optical information recording medium according to claim 6, wherein the synchronizing signal (42) is recorded such that a distance of end points of adjacent marks is constant, and wherein reproduction of the synchronizing signal (42) is performed by detecting the end points of each mark, and wherein the original write data (11a) following the synchronizing signal (42) are recorded and reproduced with pulse width modulation.

12. The recording method for an optical information recording medium according to claim 6, wherein a start point of recording in each sector (18) is altered at random.

13. A recording method for an optical information recording medium in which a light beam is irradiated to change a state of a photo-sensitive record layer, wherein write data to be recorded into each sector (18) of the optical information recording medium includes a synchronizing signal (45), a data head indicating mark (43) added to the end of the synchronizing signal (42), and original write data (11a) following the data head indicating mark (43), and wherein a record starting point of the synchronizing signal (42) in each sector is fixed, **characterized in, that** the length of the synchronizing signal (42) area is altered at every recording.

14. A recording method for an optical information recording medium in which a light beam is irradiated to change a state of a photo-sensitive record layer, wherein write data to be recorded into each sector (18) of the optical information recording medium include a synchronizing signal (42), a data head indicating mark (43) added to the end of the synchronizing signal (42), original write data (11a) following the data head indicating mark (43), and dummy data (26, 45) added to the end of the original write data (11a), characterised in, that the end point of the data is altered at random and the length of the dummy data (26, 45) is altered in such a way that the length of the dummy data string is shortened as the data head indicating mark shifts behind and lengthened as the data head indicating mark shifts forward so that the end position of the dummy data (26, 45) does not change on the optical disk.

15. The recording method for an optical information recording medium according to claim 14, wherein a length of the dummy data (26, 45) is altered so that a record end position of the dummy data (26, 45) in a sector (18) is substantially fixed.

16. A recording method for an optical information recording medium in which a light beam is irradiated to change a state of a photo-sensitive record layer, wherein write data to be recorded into each sector (18) of the optical information recording medium include a synchronizing signal (42), a data head indicating mark (43) added to the end of the synchronizing signal (42), and original write data (11a) following the data head indicating mark (43) **characterised in, that** the largest position shift of the data head indicating mark (43) is altered according to the recording radius.

17. The recording method for an optical information recording medium according to claim 16, wherein a light beam is irradiated to change a state of a photo-sensitive record layer, wherein write data to be recorded into each sector (18) of the optical information recording medium include a synchronizing signal (42), a data head indicating mark (43) added to the end of the synchronizing signal (42), and original write data (11a) following the data head indicating mark (43) is altered in a predetermined range at every recording, and that an average length of the synchronizing signal area is altered according to a recording radius.

18. A recording method for an optical information recording medium in which a light beam is irradiated to change a state of a photo-sensitive record layer, wherein write data to be recorded into each sector (18) of the optical information recording medium includes a synchronizing signal (42), a data head indicating mark (43) added to the end of the synchronizing signal (42), original write data (11a) following the data head indicating mark (43), and dummy data (26, 45) added to the end of the original data (11a) **characterized in, that** a length of the dummy data (26, 45) in each sector (18) is altered in predetermined range at every recording, and that an average length of the dummy data (26, 45) is altered according to a recording radius.

19. A recording apparatus for an optical information recording medium in which a light beam is irradiated to change a state of a photo-sensitive record layer, comprising
means (7a) for encoding a write information (5) of predetermined block length into write data (11a);
means (21) for generating dummy data (26, 45) whose ratio of a record pulse distance and a record pulse length is larger nearer to an end of the dummy data (26, 45);
means (22) for composing the write data (11a) and the dummy data (26, 45) by adding the dummy data (26, 45) to an end of the write data (11a);
characterized in that means (21) for controlling the light irradiating energy according to an output of the composing means are provided.

20. A recording apparatus for an optical information recording medium in which a light beam is irradiated to change a state of a photo-sensitive record layer, comprising means for recording in turn a synchronizing signal (42), a data head indicating mark (43) and original write data (11a); means for fixing a record start point of the synchronizing signal (42), **characterised** by means for altering a length of the synchronizing signal (42) in a predetermined range at every recording.

21. The recording apparatus for an optical information recording medium according to claim 20, wherein the altering means of the length of the synchronizing signal (42) includes a synchronizing signal generator (2) that starts and stops the synchronizing signal (42) triggered by an input pulse; and a random selector that gives a random delay time to the input pulse for the synchronizing signal generator.

22. A recording apparatus for an optical information recording medium in which a light beam is irradiated to change a state of a photo-sensitive record layer, comprising means for recording in turn a synchronizing signal (42), a data head indicating mark (43), original write data (11a) and dummy data (26, 45), **characterised** by means for altering a length of the dummy data (26, 45) according to a position of the data head indicating mark (43).

23. The recording apparatus for an optical information recording medium according to claim 22, wherein the apparatus includes means for adjusting a record end position of the dummy data (26, 45) in a sector (18) of the optical information recording medium so as to be substantially fixed.

24. A recording apparatus for an optical information recording medium in which a light beam is irradiated to change a state of a photo-sensitive record layer, comprising means for recording in turn a synchronizing signal (42), a data head indicating mark (43) and original write data (11a), **characterised** by means for altering a position of the data head indicating mark (43) in a predetermined range at every recording; and means for altering a largest position shift (2401) of the data head indicating mark (43) according to the recording radius.

25. A recording apparatus for an optical information recording medium in which a light beam is irradiated to change a state of a photo-sensitive record layer, comprising means for recording in turn a synchronizing signal (42), a data head indicating mark (43) and original write data (11a), **characterised** by means for altering a position of the data head indicating mark (43) in a predetermined range at every recording; and means for altering an average length of the synchronizing signal (42) area according to the recording radius.

26. A recording apparatus for an optical information recording medium in which a light beam is irradiated to change a state of a photo-sensitive record layer, comprising means for recording in turn a synchronizing signal (42), a data head indicating mark (43), original write data (11a) and dummy data (45), **characterised** by means for altering an average length of the dummy data (45) according to the recording radius.

27. A recording method for an optical information recording medium in which a light beam is irradiated to change a state of a photo-sensitive record layer, wherein write data to be recorded into each sector (18) of the optical information recording medium includes a synchronizing signal (42), a data head indicating mark (43) added to the end of the synchronizing signal (42) and original write data (11a) following the data head indicating mark (43), **characterized in, that** a length of the synchronizing signal area is altered at every recording.

28. A recording method according to claim 27, wherein the write data further includes dummy data (26, 45) added to the end of the original write data (11a), a length of the dummy data (26, 45) being altered in such a way that the length of the dummy data string is shortened as the data head indicating mark (43) shifts behind and lengthened as the data head indicating mark (43) shifts forward so that the end portion of the dummy data (26, 45) does not change substantially on the optical disk.

29. A recording method according to claim 27, wherein a position of the data head indicating mark (43) is altered in a predetermined range at every recording, and a largest position shift (2401) of the data head indicating mark (43) is altered according to a recording radius.

30. A recording method according to claim 27, wherein a position of the data head indicating mark (43) is altered in a predetermined range at every recording, and an average length of the synchronizing signal area is altered according to a recording radius.

31. A recording method according to claim 27, wherein the write data further includes dummy data (26, 45) added to the end of the original data (11a), and wherein a length of the dummy data (26, 45) in each sector (18) is altered in predetermined range at every recording, and an average length of the dummy data (26, 45) is altered according to a recording radius.

32. A recording apparatus for an optical information recording medium in which a light beam is irradiated to change a state of a photo-sensitive record layer, comprising means for recording in turn a synchronizing signal (42), a data head indicating mark (43) added to the end of the synchronizing signal (42) and original write data (11a), **characterized in, that** the apparatus further comprises means for altering a length of the synchronizing signal (42) in a predetermined range at every recording.

33. A recording apparatus according to claim 32, wherein the altering means of the length of the synchronizing signal includes
a synchronizing signal generator (2) that starts and stops the synchronizing signal (42) triggered by an input pulse; and
a random selector that gives a random delay time to the input pulse for the synchronizing signal generator (2).

34. A recording apparatus according to claim 32, further comprising:
means for adding dummy data (26, 45) to the end of the original write data (11a);
and means for altering a length of the dummy data (26, 45) in such a way that the length of the dummy data string is shortened as the data head indicating mark (43) shifts behind and lengthened as the data head indicating mark (43) shifts forward so that the end portion of the dummy data (26, 45) does not change on the optical disk.

35. A recording apparatus according to claim 32, further comprising means for altering a position of the data head indicating mark (43) in a predetermined range at every recording; and means for altering a largest position shift (2401) of the data head indicating mark (43) according to a recording radius.

36. A recording apparatus according to claim 32, further comprising means for altering a position of the data head indicating mark (43) in a predetermined range at every recording; and means for altering an average length of the synchronizing signal area according to a recording radius.

37. A recording apparatus according to claim 33, further comprising means for adding dummy data (26, 45) to the end of the original write data (11a); and means for altering an average length of the dummy data (26, 45) according to a recording radius.

## Patentansprüche

1. Aufzeichnungsverfahren für ein optische Informationen aufzeichnendes Medium, bei dem ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten bereitgestellt werden, dadurch gekennzeichnet, daß die Schreibdaten ursprüngliche Daten (11a) und Leerdaten (26, 45) enthalten, die zum Kopfteil der ursprünglichen Schreibdaten (11a) hinzugefügt werden, und daß ein Verhältnis eines Aufzeichnungsmarkenabstands und einer Aufzeichnungsmarkenlänge für die Leerdaten (26, 45) gewählt wird, das in der Nähe des Kopfteils der Leerdaten (26, 45) größer ist.

2. Aufzeichnungsverfahren für ein optische Informationen aufzeichnendes Medium nach Anspruch 1, wobei am Kopfteil der ursprünglichen Schreibdaten (11a) ein Synchronisationssignal (42) hinzugefügt wird und wobei ein Aufzeichnungsmarkenabstand und eine Aufzeichnungsmarkenlänge am Ende der Leerdaten (26, 45) mit einem Aufzeichnungsmarkenabstand und einer Aufzeichnungsmarkenlänge des Synchronisationssignals (42) identisch sind.

3. Aufzeichnungsverfahren für ein optische Informationen aufzeichnendes Medium, bei dem ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten bereitgestellt werden, dadurch gekennzeichnet, daß die Schreibdaten ursprüngliche Daten (11a) und Leerdaten (26, 45) hinter den ursprünglichen Leerdaten (11a) enthalten und ein Verhältnis eines Aufzeichnungsmarkenabstands und einer Aufzeichnungsmarkenlänge für die Leerdaten (26, 45) gewählt wird, das in der Nähe des Endes der Leerdaten (26, 45) größer ist.

4. Aufzeichnungsverfahren für ein optische Informationen aufzeichnendes Medium nach Anspruch 1, wobei ein Startpunkt des Aufzeichnens in jedem Sektor (18) auf zufällig Weise verändert wird.

5. Aufzeichnungsverfahren für ein optische Informationen aufzeichnendes Medium nach Anspruch 1, weiterhin mit den folgenden Schritten:
zufälliges Entscheiden, Schreibdaten (11a), die eine vorbestimmte Blocklänge aufweisen, zu invertieren oder nicht zu invertieren;
Invertieren der Schreibdaten (11a), wenn entschieden wird, die Schreibdaten (11a) zu invertieren; und
Aufzeichnen entweder der nichtinvertierten Schreibdaten oder der invertierten Schreibdaten (11b) in die lichtempfindliche Aufzeichnungsschicht.

6. Aufzeichnungsverfahren für ein optische Informationen aufzeichnendes Medium, bei dem ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten ursprüngliche Schreibdaten (11a) enthalten und einem Kopfteil der ursprünglichen Schreibdaten ein Synchronisationssignal (42) hinzugefügt wird, dadurch gekennzeichnet, daß das Verhältnis eines Aufzeichnungsmarkenabstands und einer Aufzeichnungsmarkenlänge für die Markenfolge, die mindestens in einem Kopfbereich des Synchronisationssignals (42) aufgezeichnet wird, größer als Eins ist.

7. Aufzeichnungsverfahren für ein optische Informationen aufzeichnendes Medium nach Anspruch 6, wobei ein Verhältnis eines Aufzeichnungsmarkenabstands und einer Aufzeichnungsmarkenlänge für die Markenfolge, die mindestens in einem Kopfbereich des Synchronisationssignals (42) aufgezeichnet wird, größer als 1,5 ist.

8. Aufzeichnungsverfahren für ein optische Informationen aufzeichnendes Medium nach Anspruch 6, wobei Leerdaten (26, 45) im Anschluß an die ursprünglichen Schreibdaten (11a) aufgezeichnet werden.

9. Aufzeichnungsverfahren für ein optische Informationen aufzeichnendes Medium nach Anspruch 6, wobei Leerdaten (26, 45) zwischen dem Synchronisationssignal (42) und den ursprünglichen Schreibdaten (11a) aufgezeichnet werden.

10. Aufzeichnungsverfahren für ein optische Informationen aufzeichnendes Medium nach Anspruch 6, wobei das Synchronisationssignal (42) so aufgezeichnet wird, daß ein Abstand von Kopfpunkten angrenzender Marken konstant ist, und wobei die Wiedergabe des Synchronisationssignals (42) dadurch durchgeführt wird, daß die Kopfpunkte jeder Marke erfaßt werden, und wobei die ursprünglichen Schreibdaten (11a) nach dem Synchronisationssignal (42) mit Impulsbreitenmodulation aufgezeichnet und wiedergegeben werden.

11. Aufzeichnungsverfahren für ein optische Informationen aufzeichnendes Medium nach Anspruch 6, wobei das Synchronisationssignal (42) so aufgezeichnet wird, daß ein Abstand von Endpunkten angrenzender Marken konstant ist, und wobei die Wiedergabe des Synchronisationssignals (42) dadurch durchgeführt wird, daß die Endpunkte jeder Marke erfaßt werden, und wobei die ursprünglichen Schreibdaten (11a) nach dem Synchronisationssignal (42) mit Impulsbreitenmodulation aufgezeichnet und wiedergegeben werden.

12. Aufzeichnungsverfahren für ein optische Informationen aufzeichnendes Medium nach Anspruch 6, wobei ein Startpunkt des Aufzeichnens in jedem Sektor (18) auf zufällig Weise verändert wird.

13. Aufzeichnungsverfahren für ein optische Informationen aufzeichnendes Medium, bei dem ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten ein Synchronisationssignal (45), eine am Ende des Synchronisationssignals (42) hinzugefügte Datenkopfanzeigemarke (43) und ursprüngliche Schreibdaten (11a) nach der Datenkopfanzeigemarke (43) enthalten, und wobei ein Aufzeichnungsstartpunkt des Synchronisationssignals (42) in jedem Sektor fest ist, dadurch gekennzeichnet, daß die Länge des Bereichs des Synchronisationssignals (42) bei jeder Aufzeichnung verändert wird.

14. Aufzeichnungsverfahren für ein optische Informationen aufzeichnendes Medium, bei dem ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten ein Synchronisationssignal (42), eine am Ende des Synchronisationssignals (42) hinzugefügte Datenkopfanzeigemarke (43), ursprüngliche Schreibdaten (11a) nach der Datenkopfanzeigemarke (43) und am Ende der ursprünglichen Schreibdaten (11a) hinzugefügte Leerdaten (26, 45) enthalten, dadurch gekennzeichnet, daß der Endpunkt der Daten auf zufällige Weise verändert wird und die Länge der Leerdaten (26, 45) so verändert wird, daß die Länge der Leerdatenkette verkürzt wird, wenn sich die Datenkopfanzeigemarke nach hinten verschiebt, und verlängert wird, wenn sich die Datenkopfanzeigemarke nach vorne verschiebt, so daß sich die Endposition der Leerdaten (26, 45) auf der optischen Platte nicht ändert.

15. Aufzeichnungsverfahren für ein optische Informationen aufzeichnendes Medium nach Anspruch 14, wobei eine Länge der Leerdaten (26, 45) so verändert wird, daß eine Aufzeichnungsendeposition der Leerdaten (26, 45) in einem Sektor (18) im wesentlichen fest ist.

16. Aufzeichnungsverfahren für ein optische Informationen aufzeichnendes Medium, bei dem ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten ein Synchronisationssignal (42), eine am Ende des Synchronisationssignals (42) hinzugefügte Datenkopfanzeigemarke (43) und ursprüngliche Schreibdaten (11a) nach der Datenkopfanzeigemarke (43) enthalten, dadurch gekennzeichnet, daß die größte Positionsverschiebung der Datenkopfanzeigemarke (43) gemäß dem Aufzeichnungsradius verändert wird.

17. Aufzeichnungsverfahren für ein optische Informationen aufzeichnendes Medium nach Anspruch 16, wobei ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten ein Synchronisationssignal (42), eine am Ende des Synchronisationssignals (42) hinzugefügte Datenkopfanzeigemarke (43) enthalten und ursprüngliche Schreibdaten (11a) nach der Datenkopfanzeigemarke (43) in einem vorbestimmten Bereich bei jeder Aufzeichnung verändert werden, und daß eine mittlere Länge des Bereichs des Synchronisationssignals gemäß einem Aufzeichnungsradius verändert wird.

18. Aufzeichnungsverfahren für ein optische Informationen aufzeichnendes Medium, bei dem ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten ein Synchronisationssignal (42), eine am Ende des Synchronisationssignals (42) hinzugefügte Datenkopfanzeigemarke (43), ursprüngliche Schreibdaten (11a) nach der Datenkopfanzeigemarke (43) und am Ende der ursprünglichen Daten (11a) hinzugefügte Leerdaten (26, 45) enthalten, dadurch gekennzeichnet, daß eine Länge der Leerdaten (26, 45) in jedem Sektor (18) bei jeder Aufzeichnung in einem vorbestimmten Bereich verändert wird und daß eine mittlere Länge der Leerdaten (26, 45) gemäß einem Aufzeichnungsradius verändert wird.

19. Aufzeichnungsvorrichtung für ein optische Informationen aufzeichnendes Medium, bei der ein Lichtstrahl abgestrahlt wird, um einen Zustand einer lichtempfindlichen Aufzeichnungsschicht zu ändern, umfassend:
ein Mittel (7a) zum Codieren einer Schreibinformation (5) vorbestimmter Blocklänge zu Schreibdaten (11a);
ein Mittel (21) zum Erzeugen von Leerdaten (26, 45), deren Verhältnis eines Aufzeichnungsimpulsabstands und einer Aufzeichnungsimpulslänge in der Nähe eines Endes der Leerdaten (26, 45) größer ist;
ein Mittel (22) zum Zusammenstellen der Schreibdaten (11a) und der Leerdaten (26, 45) durch Hinzufügen der Leerdaten (26, 45) an einem Ende der Schreibdaten (11a); dadurch gekennzeichnet, daß ein Mittel (21) zur Steuerung der Lichtbestrahlungsenergie gemäß einem Ausgangssignal der Zusammenstellungsmittel bereitgestellt sind.

20. Aufzeichnungsvorrichtung für ein optische Informationen aufzeichnendes Medium, bei der ein Lichtstrahl abgestrahlt wird, um einen Zustand einer lichtempfindlichen Aufzeichnungsschicht zu ändern, mit einem Mittel zum abwechselnden Aufzeichnen eines Synchronisationssignals (42), einer Datenkopfanzeigemarke (43) und ursprünglicher Schreibdaten (11a); einem Mittel zum Festlegen eines Aufzeichnungsstartpunkts des Synchronisationssignals (42), gekennzeichnet durch ein Mittel zum Verändern einer Länge des Synchronisationssignals (42) in einem vorbestimmten Bereich bei jeder Aufzeichnung.

21. Aufzeichnungsvorrichtung für ein optische Informationen aufzeichnendes Medium nach Anspruch 20, wobei das Veränderungsmittel der Länge des Synchronisationssignals (42) einen Synchronisationssignalgenerator (2), der das Synchronisationssignal (42), getriggert durch einen Eingangsimpuls, startet und stoppt; und einen Zufallswähler, der dem Eingangsimpuls für den Synchronisationssignalgenerator eine zufällige Verzögerungszeit verleiht, umfaßt.

22. Aufzeichnungsvorrichtung für ein optische Informationen aufzeichnendes Medium, bei der ein Lichtstrahl abgestrahlt wird, um einen Zustand einer lichtempfindlichen Aufzeichnungsschicht zu ändern, mit einem Mittel zum abwechselnden Aufzeichnen eines Synchronisationssignals (42), einer Datenkopfanzeigemarke (43), ursprünglicher Schreibdaten (11a) und Leerdaten (26, 45), gekennzeichnet durch ein Mittel zum Verändern einer Länge der Leerdaten (26, 45) gemäß einer Position der Datenkopfanzeigemarke (43).

23. Aufzeichnungsvorrichtung für ein optische Informationen aufzeichnendes Medium nach Anspruch 22, wobei die Vorrichtung ein Mittel zum Einstellen einer Aufzeichnungsendposition der Leerdaten (26, 45) in einem Sektor (18) des optische Informationen aufzeichnenden Mediums auf einen im wesentlichen festen Wert enthält.

24. Aufzeichnungsvorrichtung für ein optische Informationen aufzeichnendes Medium, bei der ein Lichtstrahl abgestrahlt wird, um einen Zustand einer lichtempfindlichen Aufzeichnungsschicht zu ändern, mit einem Mittel zum abwechselnden Aufzeichnen eines Synchronisationssignals (42), einer Datenkopfanzeigemarke (43) und ursprünglicher Schreibdaten (11a), gekennzeichnet durch ein Mittel zum Verändern einer Position der Datenkopfanzeigemarke (43) in einem vorbestimmten Bereich bei jeder Aufzeichnung; und ein Mittel zum Verändern einer größten Positionsverschiebung (2401) der Datenkopfanzeigemarke (43) gemäß dem Aufzeichnungsradius.

25. Aufzeichnungsvorrichtung für ein optische Informationen aufzeichnendes Medium, bei der ein Lichtstrahl abgestrahlt wird, um einen Zustand einer lichtempfindlichen Aufzeichnungsschicht zu ändern, mit einem Mittel zum abwechselnden Aufzeichnen eines Synchronisationssignals (42), einer Datenkopfanzeigemarke (43) und ursprünglicher Schreibdaten (11a), gekennzeichnet durch ein Mittel zum Verändern einer Position der Datenkopfanzeigemarke (43) in einem vorbestimmten Bereich bei jeder Aufzeichnung; und ein Mittel zum Verändern einer mittleren Länge des Bereichs des Synchronisationssignals (42) gemäß dem Aufzeichnungsradius.

26. Aufzeichnungsvorrichtung für ein optische Informationen aufzeichnendes Medium, bei der ein Lichtstrahl abgestrahlt wird, um einen Zustand einer lichtempfindlichen Aufzeichnungsschicht zu ändern, mit einem Mittel zum abwechselnden Aufzeichnen eines Synchronisationssignals (42), einer Datenkopfanzeigemarke (43), ursprünglicher Schreibdaten (11a) und Leerdaten (45), gekennzeichnet durch ein Mittel zum Verändern einer mittleren Länge der Leerdaten (45) gemäß dem Aufzeichnungsradius.

27. Aufzeichnungsverfahren für ein optische Informationen aufzeichnendes Medium, bei dem ein Lichtstrahl abgestrahlt wird, um einen Zustand einer lichtempfindlichen Aufzeichnungsschicht zu ändern, wobei in jedem Sektor (18) des optische Informationen aufzeichnenden Mediums aufzuzeichnende Schreibdaten ein Synchronisationssignal (42), eine am Ende des Synchronisationssignals (42) hinzugefügte Datenkopfanzeigemarke (43) und ursprüngliche Schreibdaten (11a) nach der Datenkopfanzeigemarke (43) enthalten, dadurch gekennzeichnet, daß eine Länge des Synchronisationssignalbereichs bei jeder Aufzeichnung verändert wird.

28. Aufzeichnungsverfahren nach Anspruch 27, wobei die Schreibdaten weiterhin am Ende der ursprünglichen Schreibdaten (11a) hinzugefügte Leerdaten (26, 45) enthalten, wobei eine Länge der Leerdaten (26, 45) so verändert wird, daß die Länge der Leerdatenkette verkürzt wird, wenn sich die Datenkopfanzeigemarke (43) nach hinten verschiebt, und verlängert wird, wenn sich die Datenkopfanzeigemarke (43) nach vorne verschiebt, so daß sich der Endteil der Leerdaten (26, 45) auf der optischen Platte nicht wesentlich ändert.

29. Aufzeichnungsverfahren nach Anspruch 27, wobei eine Position der Datenkopfanzeigemarke (43) bei jeder Aufzeichnung in einem vorbestimmten Bereich verändert wird und eine größte Positionsverschiebung (2401) der Datenkopfanzeigemarke (43) gemäß einem Aufzeichnungsradius verändert wird.

30. Aufzeichnungsverfahren nach Anspruch 27, wobei eine Position der Datenkopfanzeigemarke (43) bei jeder Aufzeichnung in einem vorbestimmten Bereich verändert wird und eine mittlere Länge des Synchronisationssignalbereichs gemäß einem Aufzeichnungsradius verändert wird.

31. Aufzeichnungsverfahren nach Anspruch 27, wobei die Schreibdaten weiterhin am Ende der ursprünglichen Daten (11a) hinzugefügte Leerdaten (26, 45) enthalten, und wobei eine Länge der Leerdaten (26, 45) in jedem Sektor (18) in einem vorbestimmten Bereich bei jeder Aufzeichnung verändert wird und eine mittlere Länge der Leerdaten (26, 45) gemäß einem Aufzeichnungsradius verändert wird.

32. Aufzeichnungsvorrichtung für ein optische Informationen aufzeichnendes Medium, bei der ein Lichtstrahl abgestrahlt wird, um einen Zustand einer lichtempfindlichen Aufzeichnungsschicht zu ändern, mit einem Mittel zum abwechselnden Aufzeichnen eines Synchronisationssignals (42), einer am Ende des Synchronisationssignals (42) hinzugefügten Datenkopfanzeigemarke (43) und ursprünglicher Schreibdaten (11a), dadurch gekennzeichnet, daß die Vorrichtung weiterhin ein Mittel zum Verändern einer Länge des Synchronisationssignals (42) in einem vorbestimmten Bereich bei jeder Aufzeichnung umfaßt.

33. Aufzeichnungsvorrichtung nach Anspruch 32, wobei die Veränderungsmittel der Länge des Synchronisationssignals (42) folgendes umfassen:
einen Synchronisationssignalgenerator (2), der das Synchronisationssignal (42), getriggert durch einen Eingangsimpuls, startet und stoppt; und
einen Zufallswähler, der dem Eingangsimpuls für den Synchronisationssignalgenerator (2) eine zufällige Verzögerungszeit verleiht.

34. Aufzeichnungsvorrichtung nach Anspruch 32, weiterhin umfassend:
ein Mittel zum Hinzufügen von Leerdaten (26, 45) am Ende der ursprünglichen Schreibdaten (11a); und
ein Mittel zum Verändern einer Länge der Leerdaten (26, 45) dergestalt, daß die Länge der Leerdatenkette verkürzt wird, wenn sich die Datenkopfanzeigemarke (43) nach hinten verschiebt, und verlängert wird, wenn sich die Datenkopfanzeigemarke (43) nach vorne verschiebt, so daß sich der Endteil der Leerdaten (26, 45) auf der optischen Platte nicht ändert.

35. Aufzeichnungsvorrichtung nach Anspruch 32, weiterhin mit einem Mittel zum Verändern einer Position der Datenkopfanzeigemarke (43) in einem vorbestimmten Bereich bei jeder Aufzeichnung; und einem Mittel zum Verändern einer größten Positionsverschiebung (2401) der Datenkopfanzeigemarke (43) gemäß einem Aufzeichnungsradius.

36. Aufzeichnungsvorrichtung nach Anspruch 32, weiterhin mit einem Mittel zum Verändern einer Position der Datenkopfanzeigemarke (43) in einem vorbestimmten Bereich bei jeder Aufzeichnung; und einem Mittel zum Verändern einer mittleren Länge des Synchronisationssignalbereichs gemäß einem Aufzeichnungsradius.

37. Aufzeichnungsvorrichtung nach Anspruch 33, weiterhin mit einem Mittel zum Hinzufügen von Leerdaten (26, 45) am Ende der ursprünglichen Daten (11a); und einem Mittel zum Verändern einer mittleren Länge der Leerdaten (26, 45) gemäß einem Aufzeichnungsradius.

## Revendications

1. Procédé d'enregistrement destiné à un support d'enregistrement d'informations optique dans lequel un faisceau de lumière est rayonné pour modifier un état d'une couche d'enregistrement photosensible, comprenant la fourniture des données d'écriture devant être enregistrées dans chaque secteur (18) du support d'enregistrement d'informations optique **caractérisé en ce que**, les données d'écriture comprennent les données d'origine (11a) et des données factices (26, 45) ajoutées en tête des données d'écriture d'origine (11a), et en ce qu'un rapport d'une distance des marques enregistrées et d'une longueur des marques enregistrées pour les données factices (26, 45) est sélectionné, lequel est plus grand plus près de la tête des données factices (26, 45).

2. Procédé d'enregistrement destiné à un support d'enregistrement d'informations optique selon la revendication 1, dans lequel un signal de synchronisation (42) est inclus en tête des données d'écriture d'origine (11a), et dans lequel une distance des marques enregistrées et une longueur des marques enregistrées à la fin des données factices (26, 45) sont identiques à une distance des marques enregistrées et une longueur des marques enregistrées du signal de synchronisation (42).

3. Procédé d'enregistrement destiné à un support d'enregistrement d'informations optique dans lequel un faisceau de lumière est rayonné pour modifier un état d'une couche d'enregistrement photosensible, comprenant l'application des données d'écriture devant être enregistrées dans chaque secteur (18) du support d'enregistrement d'informations optique **caractérisé en ce que** les données d'écriture -comprennent des données d'écriture d'origine (11a) et des données factices (26, 45) à la suite des données d'écriture d'origine (11a), et une sélection d'un rapport d'une distance des marques enregistrées et d'une longueur des marques enregistrées pour les données factices (26, 45) qui est plus grand plus près de la fin des données factices (26, 45).

4. Procédé d'enregistrement destiné à un support d'enregistrement d'informations optique selon la revendication 1, dans lequel un point de départ de l'enregistrement dans chaque secteur (18) est modifié de façon aléatoire.

5. Procédé d'enregistrement destiné à un support d'enregistrement d'informations optique selon la revendication 1, comprenant les étapes consistant à
décider de façon aléatoire d'inverser ou de ne pas inverser des données d'écriture (11a) qui présentent une longueur de bloc prédéterminée,
inverser les données d'écriture (11a) si la décision consiste à inverser les données d'écriture (11a), et
enregistrer soit les données d'écriture non inversées soit les données d'écriture inversées (11b) dans la couche d'enregistrement photosensible.

6. Procédé d'enregistrement destiné à un support d'enregistrement d'informations optique dans lequel un faisceau de lumière est rayonné pour modifier un état d'une couche d'enregistrement photosensible, dans lequel des données d'écriture devant être enregistrées dans chaque secteur (18) du support d'enregistrement d'informations optique comprennent des données d'écriture d'origine (11a) et un signal de synchronisation (42) ajouté en tête des données d'écriture d'origine, **caractérisé en ce que** le rapport d'une distance des marques enregistrées et d'une longueur des marques enregistrées est plus grand que celui pour la séquence des marques enregistrées au moins dans une zone de tête du signal de synchronisation (42).

7. Procédé d'enregistrement destiné à un support d'enregistrement d'informations optique selon la revendication 6, dans lequel un rapport d'une distance des marques enregistrées et d'une longueur des marques enregistrées est de plus de 1,5 pour la séquence des marques enregistrées au moins dans une zone de tête du signal de synchronisation (42).

8. Procédé d'enregistrement destiné à un support d'enregistrement d'informations optique selon la revendication 6, dans lequel des données factices (26, 45) sont enregistrées à la suite des données d'écriture d'origine (11a).

9. Procédé d'enregistrement destiné à un support d'enregistrement d'informations optique selon la revendication 6, dans lequel des données factices (26, 45) sont enregistrées entre le signal de synchronisation (42) et les données d'écriture d'origine (11a).

10. Procédé d'enregistrement destiné à un support d'enregistrement d'informations optique selon la revendication 6, dans lequel le signal de synchronisation (42) est enregistré de telle sorte qu'une distance des points de tête des marques adjacentes soit constante, et dans lequel la reproduction du signal de synchronisation (42) est exécutée en détectant les points de tête de chaque marque, et dans lequel les données d'écriture d'origine (11a) qui suivent le signal de synchronisation (42) sont enregistrées et reproduites avec une modulation de largeur d'impulsion.

11. Procédé d'enregistrement destiné à un support d'enregistrement d'informations optique selon la revendication 6, dans lequel le signal de synchronisation (42) est enregistré de telle sorte qu'une distance des points de fin des marques adjacentes soit constante, et dans lequel la reproduction du signal de synchronisation (42) est exécutée en détectant les points de fin de chaque marque, et dans lequel les données d'écriture d'origine (11a) à la suite du signal de synchronisation (42) sont enregistrées et reproduites avec une modulation de largeur d'impulsion.

12. Procédé d'enregistrement destiné à un support d'enregistrement d'informations optique selon la revendication 6, dans lequel un point de début de l'enregistrement dans chaque secteur (18) est modifié de façon aléatoire.

13. Procédé d'enregistrement destiné à un support d'enregistrement d'informations optique dans lequel un faisceau de lumière est rayonné pour modifier un état d'une couche d'enregistrement photosensible, dans lequel des données d'écriture devant être enregistrées dans chaque secteur (18) du support d'enregistrement d'informations optique comprennent un signal de synchronisation (45), une marque d'indication de tête de données (43) ajoutée à la fin du signal de synchronisation (42) et des données d'écriture d'origine (11a) qui suivent la marque d'indication de tête de données (43), et dans lequel un point de début d'enregistrement du signal de synchronisation (42) dans chaque secteur est fixe, **caractérisé en ce que** la longueur de la zone du signal de synchronisation (42) est modifiée à chaque enregistrement.

14. Procédé d'enregistrement destiné à un support d'enregistrement d'informations optique dans lequel un faisceau de lumière est rayonné pour modifier un état d'une couche d'enregistrement photosensible, dans lequel des données d'écriture devant être enregistrées dans chaque secteur (18) du support d'enregistrement d'informations optique comprennent un signal de synchronisation (42), une marque d'indication de tête de données (43) ajoutée à la fin du signal de synchronisation (42), des données d'écriture d'origine (11a) à la suite de la marque d'indication de la tête des données (43), et des données factices (26, 45) ajoutées à la fin des données d'écriture d'origine (11a), **caractérisé en ce que** le point de fin des données est modifié de façon aléatoire et que la longueur des données factices (26, 45) est modifiée de telle manière que la longueur de la chaîne des données factices est raccourcie lorsque la marque d'indication de tête des données se décale vers l'arrière et qu'elle est allongée lorsque la marque d'indication de tête des données se décale vers l'avant de sorte que la position de fin des données factices (26, 45) ne varie pas sur le disque optique.

15. Procédé d'enregistrement destiné à un support d'enregistrement d'informations optique selon la revendication 14, dans lequel une longueur des données factices (26, 45) est modifiée de façon à ce qu'une position de fin d'enregistrement des données factices (26, 45) dans un secteur (18) soit sensiblement fixe.

16. Procédé d'enregistrement destiné à un support d'enregistrement d'informations optique dans lequel un faisceau de lumière est rayonné pour modifier un état d'une couche d'enregistrement photosensible, dans lequel des données d'écriture devant être enregistrées dans chaque secteur (18) du support d'enregistrement d'informations optique comprennent un signal de synchronisation (42), une marque d'indication de tête de données (43) ajoutée à la fin du signal de synchronisation (42), et des données d'écriture d'origine (11a) à la suite de la marque d'indication de la tête des données (43), **caractérisé en ce que** le décalage de position le plus grand de la marque d'indication de la tête des données (43) est modifié conformément au rayon d'enregistrement.

17. Procédé d'enregistrement destiné à un support d'enregistrement d'informations optique selon la revendication 16, dans lequel un faisceau de lumière est rayonné pour modifier un état d'une couche d'enregistrement photosensible, dans lequel des données d'écriture devant être enregistrées dans chaque secteur (18) du support d'enregistrement d'informations optique comprennent un signal de synchronisation (42), une marque d'indication de tête de données (43) ajoutée à la fin du signal de synchronisation (42), et des données d'écriture d'origine (11a) à la suite de la marque d'indication de la tête des données (43), sont modifiées dans une plage prédéterminée à chaque enregistrement, et en ce qu'une longueur moyenne de la zone du signal de synchronisation est modifiée conformément à un rayon d'enregistrement.

18. Procédé d'enregistrement destiné à un support d'enregistrement d'informations optique dans lequel un faisceau de lumière est rayonné pour modifier un état d'une couche d'enregistrement photosensible, dans lequel des données d'écriture devant être enregistrées dans chaque secteur (18) du support d'enregistrement d'informations optique comprennent un signal de synchronisation (42), une marque d'indication de tête de données (43) ajoutée à la fin du signal de synchronisation (42), des données d'écriture d'origine (11a) à la suite de la marque d'indication de la tête des données (43), et des données factices (26, 45) ajoutées à la fin des données d'origine (11a) **caractérisé en ce qu'**une longueur des données factices (26, 45) dans chaque secteur (18) est modifiée dans une plage prédéterminée à chaque enregistrement, et en ce qu'une longueur moyenne des données factices (26, 45) est modifiée conformément à un rayon d'enregistrement.

19. Appareil d'enregistrement destiné à un support d'enregistrement d'informations optique dans lequel un faisceau de lumière est rayonné pour modifier un état d'une couche d'enregistrement photosensible, comprenant
un moyen (7a) destiné à coder des informations d'écriture (5) d'une longueur de bloc prédéterminée en des données d'écriture (11a),
un moyen (21) destiné à générer des données factices (26, 45) dont le rapport d'une distance d'impulsions d'enregistrement et d'une longueur d'impulsions d'enregistrement est plus grand plus près d'une fin des données factices (26, 45),
un moyen (22) destiné à composer les données d'écriture (11a) et les données factices (26, 45) en ajoutant les données factices (26, 45) à une fin des données d'écriture (11a), **caractérisé en ce qu**'un moyen (21) destiné à commander l'énergie du rayonnement lumineux selon une sortie du moyen de composition, est prévu.

20. Appareil d'enregistrement destiné à un support d'enregistrement d'informations optique dans lequel un faisceau de lumière est rayonné pour modifier un état d'une couche d'enregistrement photosensible, comprenant un moyen destiné à enregistrer tour à tour un signal de synchronisation (42), une marque d'indication de tête de données (43) et des données d'écriture d'origine (11a), un moyen destiné à fixer un point de début d'enregistrement du signal de synchronisation (42), **caractérisé par** un moyen destiné à modifier une longueur du signal de synchronisation (42) dans une plage prédéterminée à chaque enregistrement.

21. Appareil d'enregistrement destiné à un support d'enregistrement d'informations optique selon la revendication 20, dans lequel le moyen de modification de la longueur du signal de synchronisation (42) comprend un générateur de signal de synchronisation (2) qui débute et arrête le signal de synchronisation (42) déclenché par une impulsion d'entrée, et un sélecteur de valeur aléatoire qui applique un temps de retard aléatoire à l'impulsion d'entrée du générateur de signal de synchronisation.

22. Appareil d'enregistrement destiné à un support d'enregistrement d'informations optique dans lequel un faisceau de lumière est rayonné pour modifier un état d'une couche d'enregistrement photosensible, comprenant un moyen destiné à enregistrer tour à tour un signal de synchronisation (42), une marque d'indication de tête de données (43), des données d'écriture d'origine (11a) et des données factices (26, 45), **caractérisé par** un moyen destiné à modifier une longueur des données factices (26, 45) conformément à une position de la marque d'indication de la tête des données (43).

23. Appareil d'enregistrement destiné à un support d'enregistrement d'informations optique selon la revendication 22, dans lequel l'appareil comprend un moyen destiné à ajuster une position de fin d'enregistrement des données factices (26, 45) dans un secteur (18) du support d'enregistrement d'informations optique de façon à ce qu'elle soit sensiblement fixe.

24. Appareil d'enregistrement destiné à un support d'enregistrement d'informations optique dans lequel un faisceau de lumière est rayonné pour modifier un état d'une couche d'enregistrement photosensible, comprenant un moyen destiné à enregistrer tour à tour un signal de synchronisation (42), une marque d'indication de tête de données (43) et des données d'écriture d'origine (11a), **caractérisé par** un moyen destiné à modifier une position de la marque d'indication de la tête des données (43) dans une plage prédéterminée à chaque enregistrement, et un moyen destiné à modifier un décalage de position le plus grand (2401) de la marque d'indication de la tête des données (43) conformément au rayon d'enregistrement.

25. Appareil d'enregistrement destiné à un support d'enregistrement d'informations optique dans lequel un faisceau de lumière est rayonné pour modifier un état d'une couche d'enregistrement photosensible, comprenant un moyen destiné à enregistrer tour à tour un signal de synchronisation (42), une marque d'indication de tête des données (43) et des données d'écriture d'origine (11a), **caractérisé par** un moyen destiné à modifier une position de la marque d'indication de la tête des données (43) dans une plage prédéterminée à chaque enregistrement, et un moyen destiné à modifier une longueur moyenne de la zone du signal de synchronisation (42) conformément au rayon d'enregistrement.

26. Appareil d'enregistrement destiné à un support d'enregistrement d'informations optique dans lequel un faisceau de lumière est rayonné pour modifier un état d'une couche d'enregistrement photosensible, comprenant un moyen destiné à enregistrer tour à tour un signal de synchronisation (42), une marque d'indication de tête des données (43), des données d'écriture d'origine (11a) et des données factices (45), **caractérisé par** un moyen destiné à modifier une longueur moyenne des données factices (45) conformément au rayon d'enregistrement.

27. Procédé d'enregistrement destiné à un support d'enregistrement d'informations optique dans lequel un faisceau de lumière est rayonné pour modifier un état d'une couche d'enregistrement photosensible, dans lequel des données d'écriture devant être enregistrées dans chaque secteur (18) du support d'enregistrement d'informations optique comprennent un signal de synchronisation (42), une marque d'indication de tête des données (43) ajoutée à la fin du signal de synchronisation (42) et des données d'écriture d'origine (11a) à la suite de la marque d'indication de la tête des données (43), **caractérisé en ce qu**'une longueur de la zone du signal de synchronisation est modifiée à chaque enregistrement.

28. Procédé d'enregistrement selon la revendication 27, dans lequel les données d'écriture comprennent en outre des données factices (26, 45) ajoutées à la fin des données d'écriture d'origine (11a), une longueur des données factices (26, 45) étant modifiée de telle manière que la longueur de la chaîne des données factices soit raccourcie lorsque la marque d'indication de la tête des données (43) se décale vers l'arrière et soit allongée lorsque la marque d'indication de la tête des données (43) se décale vers l'avant de sorte que la partie de tête des données factices (26, 45) ne varie pas sensiblement sur le disque optique.

29. Procédé d'enregistrement selon la revendication 27, dans lequel une position de la marque d'indication de la tête des données (43) est modifiée dans une plage prédéterminée à chaque enregistrement, et un décalage de position le plus grand (2401) de la marque d'indication de la tête des données (43) est modifié conformément à un rayon d'enregistrement.

30. Procédé d'enregistrement selon la revendication 27, dans lequel une position de la marque d'indication de la tête des données (43) est modifiée dans une plage prédéterminée à chaque enregistrement, et une longueur moyenne de la zone du signal de synchronisation est modifiée conformément à un rayon d'enregistrement.

31. Procédé d'enregistrement selon la revendication 27, dans lequel les données d'écriture comprennent en outre des données factices (26, 45) ajoutées à la fin des données d'origine (11a), et dans lequel une longueur des données factices (26, 45) dans chaque secteur (18) est modifiée dans une plage prédéterminée à chaque enregistrement, et une longueur moyenne des données factices (26, 45) est modifiée conformément à un rayon d'enregistrement.

32. Appareil d'enregistrement destiné à un support d'enregistrement d'informations optique dans lequel un faisceau de lumière est rayonné pour modifier un état d'une couche d'enregistrement photosensible, comprenant un moyen destiné à enregistrer tour à tour un signal de synchronisation (42), une marque d'indication de tête de données (43) ajoutée à la fin du signal de synchronisation (42) et des données d'écriture d'origine (11a), **caractérisé en ce que** l'appareil comprend en outre un moyen destiné à modifier une longueur du signal de synchronisation (42) dans une plage prédéterminée à chaque enregistrement.

33. Appareil d'enregistrement selon la revendication 32, dans lequel le moyen de modification de la longueur du signal de synchronisation comprend
un générateur de signal de synchronisation (2) qui débute et arrête le signal de synchronisation (42) déclenché par une impulsion d'entrée, et
un sélecteur de valeur aléatoire qui applique un temps de retard aléatoire à l'impulsion d'entrée pour le générateur de signal de synchronisation (2).

34. Appareil d'enregistrement selon la revendication 32, comprenant en outre :
un moyen destiné à ajouter des données factices (26, 45) à la fin des données d'écriture d'origine (11a), et un moyen destiné à modifier une longueur des données factices (26, 45) de telle manière que la longueur de la chaîne des données factices est raccourcie lorsque la marque d'indication de la tête des données (43) se décale vers l'arrière et qu'elle est allongée lorsque la marque d'indication de la tête des données (43) se décale vers l'avant de sorte que la partie de fin des données factices (26, 45) ne change pas sur le disque optique.

35. Appareil d'enregistrement selon la revendication 32, comprenant en outre un moyen destiné à modifier une position de la marque d'indication de la tête des données (43) dans une plage prédéterminée à chaque enregistrement, et un moyen destiné à modifier un décalage de position le plus grand (2401) de la marque d'indication de la tête des données (43) conformément à un rayon d'enregistrement.

36. Appareil d'enregistrement selon la revendication 32, comprenant en outre un moyen destiné à modifier une position de la marque d'indication de la tête des données (43) dans une plage prédéterminée à chaque enregistrement, et un moyen destiné à modifier une longueur moyenne de la zone du signal de synchronisation conformément à un rayon d'enregistrement.

37. Appareil d'enregistrement selon la revendication 33, comprenant en outre un moyen destiné à additionner des données factices (26, 45) à la fin des données d'écriture d'origine (11a),
et un moyen destiné à modifier une longueur moyenne des données factices (26, 45) conformément à un rayon d'enregistrement.
